(19) Europäisches Patentamt
European Patent Office
Office européen des brevets

(11) **EP 4 694 480 A1**

(12) **EUROPEAN PATENT APPLICATION**
published in accordance with Art. 153(4) EPC

(43) Date of publication:
**11.02.2026 Bulletin 2026/07**

(21) Application number: 24785120.7

(22) Date of filing: **29.03.2024**

(51) International Patent Classification (IPC):
**H04W 72/21** (2023.01)    **H04W 72/231** (2023.01)
**H04W 72/232** (2023.01)    **H04W 72/04** (2023.01)
**G06N 20/00** (2019.01)

(52) Cooperative Patent Classification (CPC):
**G06N 20/00; H04W 72/04; H04W 72/21;**
**H04W 72/231; H04W 72/232**

(86) International application number:
**PCT/KR2024/004092**

(87) International publication number:
**WO 2024/210413 (10.10.2024 Gazette 2024/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **06.04.2023  KR 20230045552**

(71) Applicant: **LG Electronics Inc.**
**Yeongdeungpo-gu**
**Seoul 07336 (KR)**

(72) Inventors:
• **KANG, Jiwon**
  **Seoul 06772 (KR)**
• **PARK, Haewook**
  **Seoul 06772 (KR)**

(74) Representative: **Mooser, Sebastian Thomas**
**Wuesthoff & Wuesthoff**
**Patentanwälte und Rechtsanwalt PartG mbB**
**Schweigerstraße 2**
**81541 München (DE)**

(54) **METHOD AND DEVICE FOR TRANSMITTING/RECEIVING UPLINK CONTROL INFORMATION IN WIRELESS COMMUNICATION SYSTEM**

(57)    A method and a device for transmitting/receiving uplink control information in a wireless communication system are disclosed. The method according to an embodiment of the present disclosure may comprise the steps of: receiving configuration information related to a UCI report from a base station; and transmitting the UCI report to the base station on the basis of the configuration information.

FIG.18

**Description**

[Technical Field]

The present disclosure relates to a wireless communication system, and in more detail, relates to a method and an apparatus of transmitting and receiving uplink control information (UCI) in a wireless communication system.

[Background Art]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

A technical object of the present disclosure is to provide a method and an apparatus for transmitting and receiving UCI considering changes in dynamic parameter settings.

The technical objects to be achieved by the present disclosure are not limited to the above-described technical objects, and other technical objects which are not described herein will be clearly understood by those skilled in the pertinent art from the following description.

[Technical Solution]

A method performed by a user equipment (UE) in a wireless communication system according to an aspect of the present disclosure may include: receiving configuration information related to an uplink control information (UCI) report from a base station; and transmitting the UCI report to the base station based on the configuration information. Among a plurality of parameters related to the UCI report in the configuration information, a setting value for at least one parameter may be changeable without reconfiguring the configuration information.

A method performed by a base station in a wireless communication system according to an additional aspect of the present disclosure may include: transmit configuration information related to an uplink control information (UCI) report to a user equipment (UE); and receive the UCI report from the UE based on the configuration information. Among a plurality of parameters related to the UCI report in the configuration information, a setting value for at least one parameter may be changeable without reconfiguring the configuration information.

[Technical Effects]

According to an embodiment of the present disclosure, signaling overhead for configuring dynamic parameters related to UCI reporting can be reduced.

In addition, according to an embodiment of the present disclosure, latency for changing the configuration of dynamic parameters related to UCI reporting can be reduced.

In addition, according to an embodiment of the present disclosure, even when multiple functionality/models are configured for UCI reporting, flexible UCI reporting operations can be performed appropriately to the situation.In addition, according to an embodiment of the present disclosure, signaling overhead for downlink control information for scheduling PUSCH transmission through multiple panels can be reduced.

Effects achievable by the present disclosure are not limited to the above-described effects, and other effects which are not described herein may be clearly understood by those skilled in the pertinent art from the following description.

[Brief Description of the Drawings]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.
FIG. 2 illustrates a frame structure in a wireless communication system to which the present disclosure may be applied.
FIG. 3 illustrates a resource grid in a wireless communication system to which the present disclosure may be applied.
FIG. 4 illustrates a physical resource block in a wireless communication system to which the present disclosure may be applied.
FIG. 5 illustrates a slot structure in a wireless communication system to which the present disclosure may be applied.
FIG. 6 illustrates physical channels used in a wireless communication system to which the present disclosure may be applied and a general signal transmission and reception method using them.
FIG. 7 illustrates a classification of artificial intelligence.
FIG. 8 illustrates a feed-forward neural network.
FIG. 9 illustrates a recurrent neural network.
FIG. 10 illustrates a convolutional neural network.
FIG. 11 illustrates an auto encoder.
FIG. 12 illustrates a functional framework for an AI operation.
FIG. 13 is a diagram illustrating split AI inference.
FIG. 14 illustrates an application of a functional framework in a wireless communication system.
FIG. 15 illustrates an application of a functional framework in a wireless communication system.
FIG. 16 illustrates an application of a functional framework in a wireless communication system.
FIG. 17 illustrates a signaling procedure between a network and a UE for a method for transmitting and receiving uplink control information according to an embodiment of the present disclosure.
FIG. 18 is a diagram illustrating an operation of a UE for a method for transmitting and receiving uplink control information according to an embodiment of the present disclosure.
FIG. 19 is a diagram illustrating an operation of a base station for a method for transmitting and receiving uplink control information according to an embodiment of the present disclosure.
FIG. 20 illustrates a block diagram of a wireless communication device according to an embodiment of the present disclosure.

[Detailed Description]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11 (Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system. "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal
- DMRS: demodulation reference signal
- FDM: frequency division multiplexing
- FFT: fast Fourier transform

- IFDMA: interleaved frequency division multiple access
- IFFT: inverse fast Fourier transform
- L1-RSRP: Layer 1 reference signal received power
- L1-RSRQ: Layer 1 reference signal received quality
- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

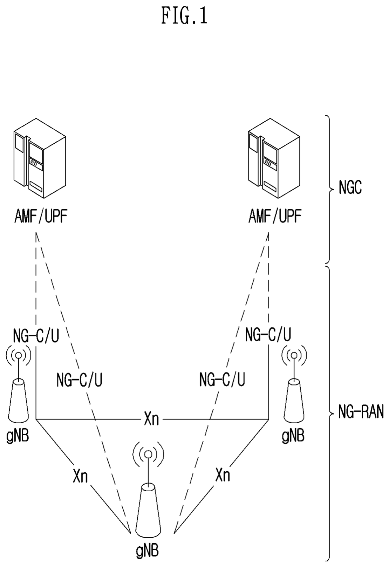

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

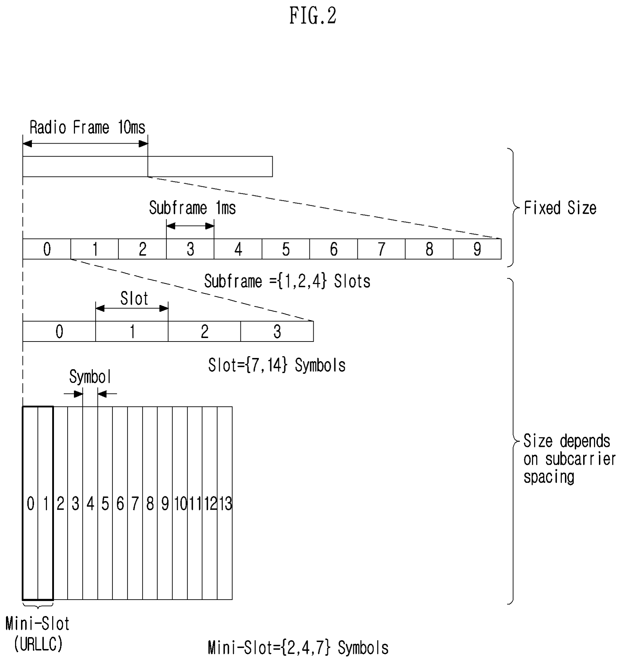

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f=2^{\mu}\cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, denseurban, lower latency and a wider carrier bandwidth are supported, and when a SCS is 60kHz or higher, a bandwidth wider than 24.25GHz is supported to overcome a phase noise.

An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c=1/(\Delta f_{max}\cdot N_f)$. Here, $\Delta f_{max}$ is 480·103 Hz and Nr is 4096. Downlink and uplink transmission is configured (organized) with a radio frame having a duration of $T_f=1/(\Delta f_{max}N_f/100)\cdot T_c=10$ms. Here, a radio frame is configured with 10 subframes having a duration of $T_{sf}=(\Delta f_{max}N_f/1000)\cdot T_c= 1$ms, respectively. In this case, there may be one set of frames for an uplink and one set of frames for a downlink. In addition, transmission in an uplink frame No. i from a terminal should start earlier by $T_{TA}=(N_{TA}+N_{TA,offset})T_c$ than a corresponding downlink frame in a corresponding terminal starts. For a subcarrier spacing configuration $\mu$, slots are numbered in an increasing order of $n_s^{\mu} \in \{0,..., N_{slot}^{subframe,\mu}-1\}$ in a subframe and are numbered in an increasing order of $n_{s,f}^{\mu} \in \{0,..., N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^{\mu}$ in a subframe is temporally arranged with a start of an OFDM symbol $n_s^{\mu}N_{symb}^{slot}$ in the same subframe. All terminals may not perform transmission and reception at the same time, which means that all OFDM symbols of a downlink slot or an uplink slot may not be used.

Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 31

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table **4**]

| μ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on μ=2 (SCS is 60kHz), 1 subframe may include 4 slots referring to Table 3. 1 subframe= {1,2,4} slot shown in FIG. 2 is an example, the number of slots which may be included in 1 subframe is defined as in Table 3 or Table 4. In addition, a mini-slot may include 2, 4 or 7 symbols or more or less symbols.

Regarding a physical resource in a NR system, an antenna port, a resource grid, a resource element, a resource block, a carrier part, etc. may be considered. Hereinafter, the physical resources which may be considered in an NR system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

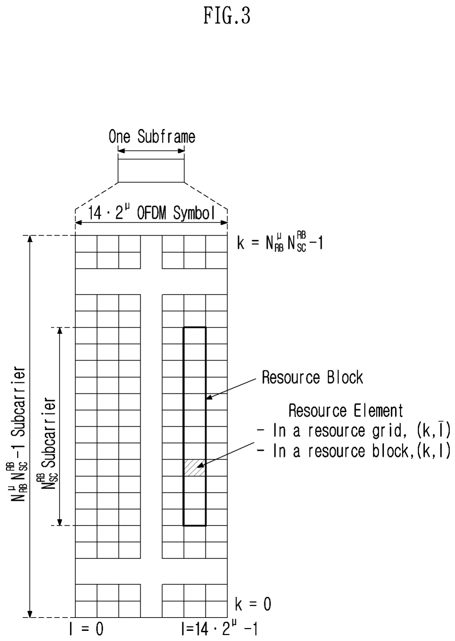

FIG. 3 illustrates a resource grid in a wireless communication system to which the present disclosure may be applied.

In reference to FIG. 3, it is illustratively described that a resource grid is configured with $N_{RB}^{\mu}N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu} \leq N_{RS}^{max,\mu}$. The $N_{RB}^{max,\mu}$ represents a maximum transmission bandwidth, which may be different between an uplink and a downlink as well as between numerologies. In this case, one resource grid may be configured per μ and antenna port p. Each element of a resource grid for μ and an antenna port p is referred to as a resource element and is uniquely identified by an index pair (k,l'). Here, k=0,..., $N_{RB}^{\mu}N_{sc}^{RB}$-1 is an index in a frequency domain and 1'=0,..., $2^{\mu}N_{symb}^{(\mu)}$-1 refers to a position of a symbol in a subframe. When referring to a resource element in a slot, an index pair (k,l) is used. Here, l=0,..., $N_{symb}^{\mu}$-1. A resource element (k,l') for μ and an antenna port p corresponds to a complex value, $a_{k,l'}^{(p,\mu)}$. When there is no risk of confusion or when a specific antenna port or numerology is not specified, indexes p and μ may be dropped, whereupon a complex value may be $a_{k,l'}^{(p)}$ or $a_{k,l'}$. In addition, a resource block (RB) is defined as $N_{sc}^{RB}$=12 consecutive subcarriers in a frequency domain.

Point A plays a role as a common reference point of a resource block grid and is obtained as follows.

**[0044]** - offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.

**[0045]** - absoluteFrequencyPointA represents a frequency-position of point A expressed as in ARFCN (absolute radio-frequency channel number).

Common resource blocks are numbered from 0 to the top in a frequency domain for a subcarrier spacing configuration μ. The center of subcarrier 0 of common resource block 0 for a subcarrier spacing configuration μ is identical to 'point A'. A relationship between a common resource block number $n_{CRB}^{\mu}$ and a resource element (k,l) for a subcarrier spacing configuration μ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}$-1 in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

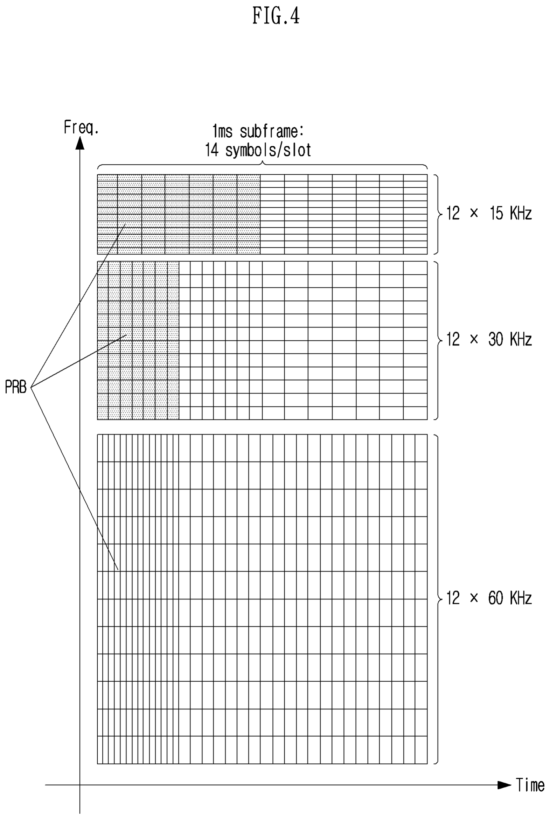

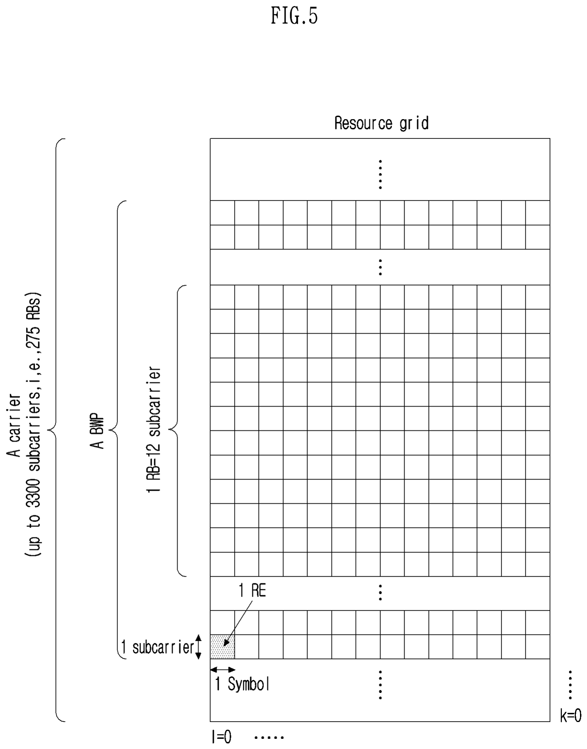

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

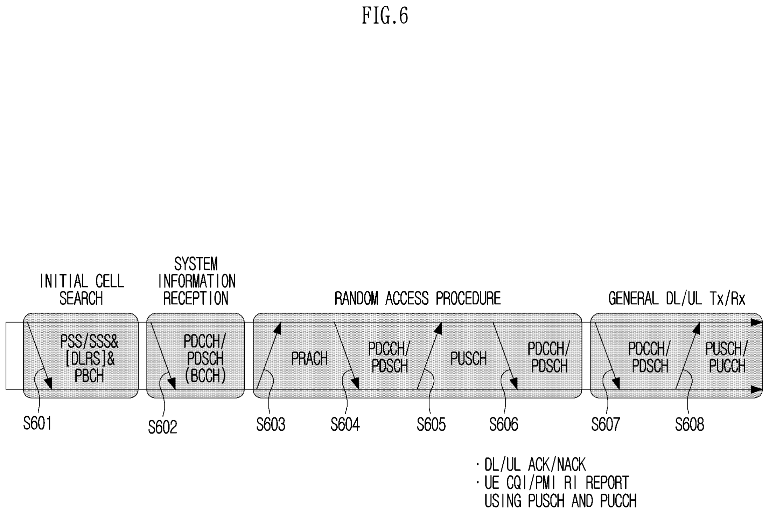

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1 0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined.

DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

Artificial Intelligence (AI) operation

With the technological advancement of artificial intelligence/machine learning (AI/ML), node(s) and UE(s) in a wireless communication network are becoming more intelligent/advanced. In particular, due to the intelligence of networks/base stations, it is expected that it will be possible to rapidly optimize and derive/apply various network/base station decision parameter values (e.g., transmission/reception power of each base station, transmission power of each UE, precoder/beam of base station/UE, time/frequency resource allocation for each UE, duplex method of each base station, etc.) according to various environmental parameters (e.g., distribution/location of base stations, distribution/location/material of buildings/furniture, etc., location/movement direction/speed of UEs, climate information, etc.). Following this trend, many standardization organizations (e.g., 3GPP, O-RAN) are considering introduction, and studies on this are also actively underway.

The AI-related descriptions and operations described below can be applied in combination with the methods proposed in the present disclosure described later, or can be supplemented to clarify the technical features of the methods proposed in the present disclosure.

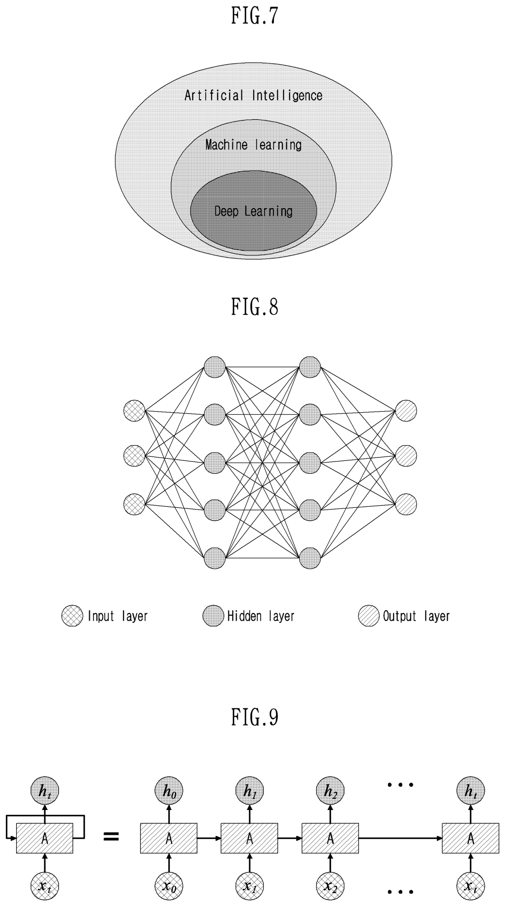

FIG. 7 illustrates a classification of artificial intelligence.

Referring to FIG. 7, artificial intelligence (AI) corresponds to all automation in which machines can replace work that should be done by humans.

Machine Learning (ML) refers to a technology in which machines learn patterns for decision-making from data on their own without explicitly programming rules.

Deep Learning is an artificial neural network-based model that allows a machine to perform feature extraction and decision from unstructured data at once. The algorithm relies on a multi-layer network of interconnected nodes for feature extraction and transformation, inspired by the biological nervous system, or Neural Network. Common deep learning network architectures include deep neural networks (DNNs), recurrent neural networks (RNNs), and convolutional neural networks (CNNs).

AI (or referred to as AI/ML) can be narrowly referred to as artificial intelligence based on deep learning, but is not limited to this in the present disclosure. That is, in the present disclosure, AI (or AI/ML) may collectively refer to automation technologies applied to intelligent machines (e.g., UE, RAN, network nodes, etc.) that can perform tasks like humans.

AI (or AI/ML) can be classified according to various criteria as follows.

1. Offline/online learning

a) Offline Learning

Offline learning follows a sequential procedure of database collection, learning, and prediction. In other words, collection and learning can be performed offline, and the completed program can be installed in the field and used for prediction work. For offline learning, the system does not learn incrementally, the learning is performed using all available collected data and applied to the system without further learning. If learning about new data is necessary, learning can begin again using all new data.

b) Online Learning

This refers to a method of gradually improving performance by incrementally additional learning with data generated in real time, recently, by taking advantage of the fact that data that can be used for learning continues to be generated through the Internet, Learning is performed in real time for each (bundle) of specific data collected online, allowing the system to quickly adapt to changing data.

Only online learning is used to build an AI system, so learning may be performed only with data generated in real time, or after offline learning is performed using a predetermined data set, additional learning may be performed using additional real-time data (online + offline learning).

2. Classification according to AI/ML Framework concept

a) Centralized Learning

In centralized learning, training data collected from a plurality of different nodes is reported to a centralized node, all data resources/storage/learning (e.g., supervised learning, unsupervised learning, reinforcement learning, etc.) are performed in one centralized node.

b) Federated Learning

Federated learning is a collective model built on data that exists across distributed data owners. Instead of collecting data into a model, AI/ML models are imported into a data source, allowing local nodes/individual devices to collect data and train their own copies of the model, eliminating the need to report the source data to a central node. In federated learning, the parameters/weights of an AI/ML model can be sent back to the centralized node to support general model training. Federated learning has advantages in terms of increased computation speed and information security. In other words, the process of uploading personal data to the central server is unnecessary, preventing leakage and misuse of personal information.

c) Distributed Learning

Distributed learning refers to the concept in which machine learning processes are scaled and distributed across a cluster of nodes. Training models are split and shared across multiple nodes operating simultaneously to speed up model training.

3. Classification according to learning method

a) Supervised Learning

Supervised learning is a machine learning task that aims to learn a mapping function from input to output, given a labeled data set. The input data is called training data and has known labels or results. An example of supervised learning is as follows.

- Regression: Linear Regression, Logistic Regression
- Instance-based Algorithms: k-Nearest Neighbor (KNN)
- Decision Tree Algorithms: Classification and Regression Tree (CART)
- Support Vector Machines (SVM)
- Bayesian Algorithms: Naive Bayes
- Ensemble Algorithms: Extreme Gradient Boosting, Bagging: Random Forest

Supervised learning can be further grouped into regression and classification problems, where classification is predicting a label and regression is predicting a quantity.

b) Unsupervised Learning

Unsupervised learning is a machine learning task that aims to learn features that describe hidden structures in unlabeled data. The input data is not labeled and there are no known results. Some examples of unsupervised learning include K-means clustering, Principal Component Analysis (PCA), nonlinear Independent Component Analysis (ICA), and Long-Short-Term Memory (LSTM).

c) Reinforcement Learning (RL)

In reinforcement learning (RL), the agent aims to optimize long-term goals by interacting with the environment based on a trial and error process, and is goal-oriented learning based on interaction with the environment. An example of the RL algorithm is as follows.

- Q-learning
- Multi-armed bandit learning
- Deep Q Network
- State-Action-Reward-State-Action (SARSA)
- Temporal Difference Learning
- Actor-critic reinforcement learning
- Deep deterministic policy gradient (DDPG)
- Monte-Carlo tree search

Additionally, reinforcement learning can be grouped into model-based reinforcement learning and model-free reinforcement learning as follows.

- Model-based reinforcement learning: refers to RL algorithm that uses a prediction model. Using a model of the various dynamic states of the environment and which states lead to rewards, the probabilities of transitions between states are obtained.
- Model-free reinforcement learning: refers to RL algorithm based on value or policy that achieves the maximum future reward. Multi-agent environments/states are computationally less complex and do not require an accurate representation of the environment.

Additionally, RL algorithm can also be classified into value-based RL vs. policy-based RL, policy-based RL vs. nonpolicy RL, etc.

Hereinafter, representative models of deep learning will be exemplified.

FIG. 8 illustrates a feed-forward neural network.

A feed-forward neural network (FFNN) is composed of an input layer, a hidden layer, and an output layer.

In FFNN, information is transmitted only from the input layer to the output layer, and if there is a hidden layer, it passes through it.

FIG. 9 illustrates a recurrent neural network.

A recurrent neural network (RNN) is a type of artificial neural network in which hidden nodes are connected to directed edges to form a directed cycle. This model is suitable for processing data that appears sequentially, such as voice and text.

In FIG. 9, A represents a neural network, xt represents an input value, and ht represents an output value. Here, ht may refer to a state value representing the current state based on time, and ht-1 may represent a previous state value.

One type of RNN is LSTM (Long Short-Term Memory), which has a structure that adds a cell-state to the hidden state of the RNN. LSTM can erase unnecessary memories by adding an input gate, forgetting gate, and output gate to the RNN cell (memory cell of the hidden layer). LSTM adds cell state compared to RNN.

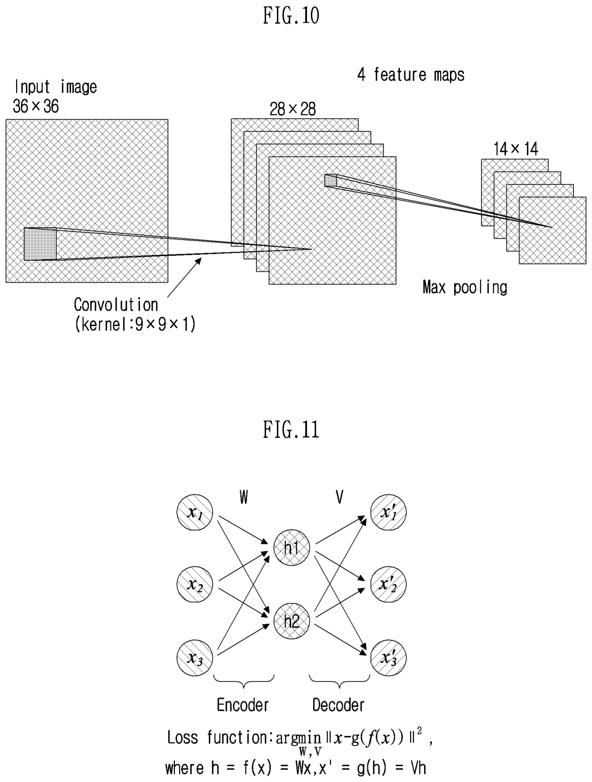

FIG. 10 illustrates a convolutional neural network.

Convolutional neural network (CNN) is used for two purposes: reducing model complexity and extracting good features by applying convolution operations commonly used in the image processing or image processing fields.

- Kernel or filter: refers to a unit/structure that applies weight to input of a specific range/unit. The kernel (or filter) can be changed through learning.
- Stride: refers to the movement range of moving the kernel within the input.
- Feature map: refers to the result of applying the kernel to input. Several feature maps can be extracted to ensure robustness to distortion, change, etc.
- Padding: refers to a value added to adjust the size of the feature map.
- Pooling: refers to an operation (e.g., max pooling, average pooling) to reduce the size of the feature map by downsampling the feature map.

FIG. 11 illustrates an auto encoder.

Auto encoder refers to a neural network that receives a feature vector x (x1, x2, x3, ...) as input and outputs the same or similar vector x' (x'1, x'2, x'3, ...)".

Auto encoder has the same characteristics as the input node and output node. Since the auto encoder reconstructs the input, the output can be referred to as reconstruction. Additionally, auto encoder is a type of unsupervised learning.

The loss function of the auto encoder illustrated in FIG. 11 is calculated based on the difference between input and output, and based on this, the degree of input loss is identified and an optimization process is performed in the auto encoder to minimize the loss.

Hereinafter, for a more specific explanation of AI (or AI/ML), terms can be defined as follows.

- Data collection: Data collected from the network nodes, management entity or UE, as a basis for AI model training, data analytics and inference.
- AI Model: A data driven algorithm by applying AI techniques that generates a set of outputs consisting of predicted information and/or decision parameters, based on a set of inputs.

AI/ML Training: An online or offline process to train an AI model by learning features and patterns that best present data and get the trained AI/ML model for inference.

AI/ML Inference: A process of using a trained AI/ML model to make a prediction or guide the decision based on collected data and AI/ML model.

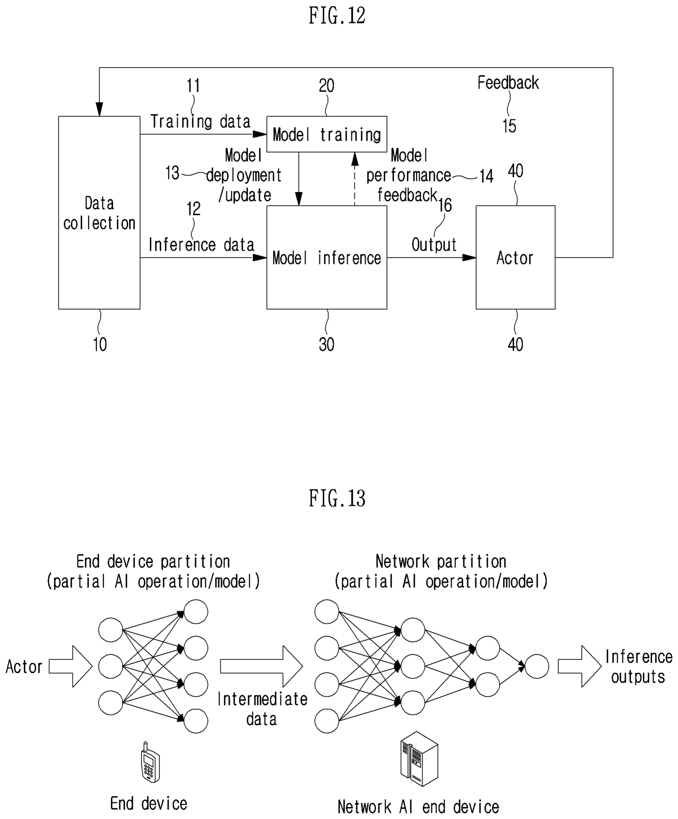

FIG. 12 illustrates a functional framework for an AI operation.

Referring to Figure 12, the data collection function (10) is a function that collects input data and provides processed input data to the model training function (20) and the model inference function (30).

Examples of input data may include measurements from UEs or different network entities, feedback from Actor, output from an AI model.

The Data Collection function (10) performs data preparation based on input data and provides input data processed through data preparation. Here, the Data Collection function (10) does not perform specific data preparation (e.g., data pre-processing and cleaning, formatting and transformation) for each AI algorithm, and data preparation common to AI algorithms can be performed.

After performing the data preparation process, the Model Training function (10) provides Training Data (11) to the Model Training function (20) and provides Inference Data (12) to the Model Inference function (30). Here, Training Data (11) is data required as input for the AI Model Training function (20). Inference Data (12) is data required as input for the AI Model Inference function (30).

The Data Collection function (10) may be performed by a single entity (e.g., UE, RAN node, network node, etc.), but may also be performed by a plurality of entities. In this case, Training Data (11) and Inference Data (12) can be provided from a plurality of entities to the Model Training function (20) and the Model Inference function (30), respectively.

Model Training function (20) is a function that performs the AI model training, validation, and testing which may generate model performance metrics as part of the model testing procedure. The Model Training function (20) is also responsible for data preparation (e.g., data pre-processing and cleaning, formatting, and transformation) based on Training Data (11) delivered by a Data Collection function (10), if required.

Here, Model Deployment/Update (13) is used to initially deploy a trained, validated, and tested AI model to the Model Inference function (30) or to deliver an updated model to the Model Inference function (30).

Model Inference function (30) is a function that provides AI model inference output (16) (e.g., predictions or decisions). Model Inference function (30) may provide Model Performance Feedback (14) to Model Training function (20) when applicable. The Model Inference function (30) is also responsible for data preparation (e.g., data pre-processing and cleaning, formatting, and transformation) based on Inference Data (12) delivered by a Data Collection function (10), if required.

Here, Output (16) refers to the inference output of the AI model produced by a Model Inference function (30), and details of inference output may be use case specific.

Model Performance Feedback (14) may be used for monitoring the performance of the AI model, when available, and this feedback may be omitted.

Actor function (40) is a function that receives the Output (16) from the Model Inference function (30) and triggers or performs corresponding actions. The Actor function (40) may trigger actions directed to other entities (e.g., one or more UEs, one or more RAN nodes, one or more network nodes, etc) or to itself.

Feedback (15) may be used to derive Training data (11), Inference data (12) or to monitor the performance of the AI Model and its impact to the network, etc.

Meanwhile, the definitions of training/validation/test in the data set used in AI/ML can be divided as follows.

- Training data: refers to a data set for learning a model.
- Validation data: This refers to a data set for verifying a model for which learning has already been completed. In other words, it usually refers to a data set used to prevent over-fitting of the training data set.

It also refers to a data set for selecting the best among various models learned during the learning process. Therefore, it can also be considered as a type of learning.

- Test data: refers to a data set for final evaluation. This data is unrelated to learning.

In the case of the data set, if the training set is generally divided, within the entire training set, training data and validation data can be divided into 8:2 or 7:3, and if testing is included, 6:2:2 (training: validation: test) can be used.

Depending on the capability of the AI/ML function between a base station and a UE, a cooperation level can be defined as follows, and modifications can be made by combining the following multiple levels or separating any one level.

Cat 0a) No collaboration framework: AI/ML algorithm is purely implementation-based and do not require any air interface changes.

Cat 0b) This level corresponds to a framework without cooperation but with a modified air interface tailored to efficient implementation-based AI/ML algorithm.

Cat 1) This involves inter-node support to improve the AI/ML algorithm of each node. This applies if a UE receives support from a gNB (for training, adaptation, etc.) and vice versa. At this level, model exchange between network nodes is not required.

Cat 2) Joint ML tasks between a UE and a gNB may be performed. This level requires AI/ML model command and an exchange between network nodes.

The functions previously illustrated in FIG. 12 may be implemented in a RAN node (e.g., base station, TRP, base station central unit (CU), etc.), a network node, a network operator's operation administration maintenance (OAM), or a UE.

Alternatively, the function illustrated in FIG. 12 may be implemented through cooperation of two or more entities among a RAN, a network node, an OAM of network operator, or a UE. For example, one entity may perform some of the functions of FIG. 12 and other entities may perform the remaining functions. As such, as some of the functions illustrated in FIG. 12 are performed by a single entity (e.g., UE, RAN node, network node, etc.), transmission/provision of data/information between each function may be omitted. For example, if the Model Training function (20) and the Model Inference function (30) are performed by the same entity, the delivery/provision of Model Deployment/Update (13) and Model Performance Feedback (14) can be omitted.

Alternatively, any one of the functions illustrated in FIG. 12 may be performed through collaboration between two or more entities among a RAN, a network node, an OAM of a network operator, or a UE. This can be referred to as a split AI operation.

FIG. 13 is a diagram illustrating split AI inference.

FIG. 13 illustrates a case in which, among split AI operations, the Model Inference function is performed in cooperation with an end device such as a UE and a network AI/ML endpoint.

In addition to the Model Inference function, the Model Training function, the Actor, and the Data Collection function are respectively split into multiple parts depending on the current task and environment, and can be performed by multiple entities collaborating.

For example, computation-intensive and energy-intensive parts may be performed at a network endpoint, while parts sensitive to personal information and delay-sensitive parts may be performed at an end device. In this case, an end device can execute a task/model from input data to a specific part/layer and then transmit intermediate data to a network endpoint. A network endpoint executes the remaining parts/layers and provides inference outputs to one or more devices that perform an action/task.

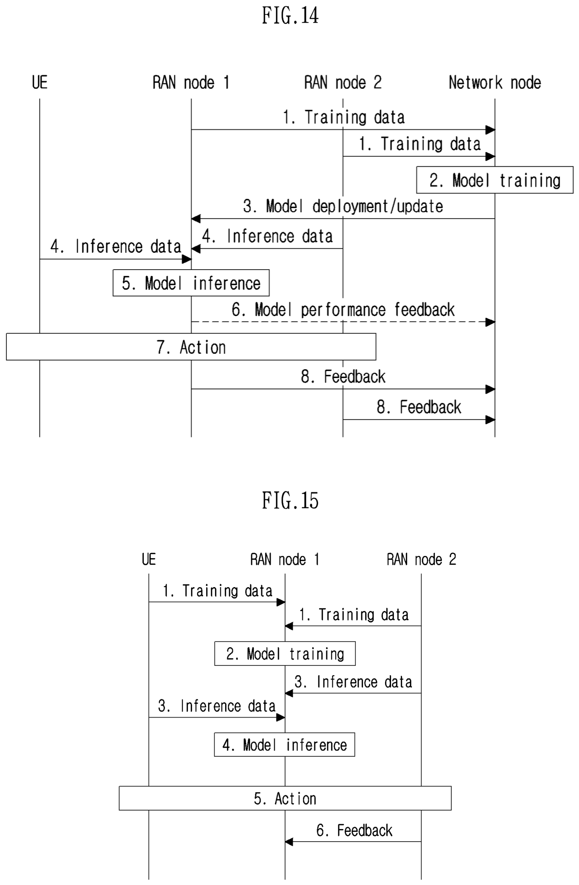

FIG. 14 illustrates an application of a functional framework in a wireless communication system.

FIG. 14 illustrates a case where the AI Model Training function is performed by a network node (e.g., core network node, network operator's OAM, etc.) and the AI Model Inference function is performed by a RAN node (e.g., base station, TRP, CU of base station, etc.).

Step 1: RAN Node 1 and RAN Node 2 transmit input data (i.e., Training data) for AI Model Training to the network node. Here, RAN Node 1 and RAN Node 2 may transmit the data collected from the UE (e.g., UE measurements related to RSRP, RSRQ, SINR of the serving cell and neighboring cells, UE location, speed, etc.) to the network node.

Step 2: The network node trains the AI Model using the received training data.

Step 3: The network node distributes/updates the AI Model to RAN Node 1 and/or RAN Node 2. RAN Node 1 (and/or RAN Node 2) may continue to perform model training based on the received AI Model.

For convenience of explanation, it is assumed that the AI Model has been distributed/updated only to RAN Node 1.

Step 4: RAN Node 1 receives input data (i.e., Inference data) for AI Model Inference from the UE and RAN Node 2.

Step 5: RAN Node 1 performs AI Model Inference using the received Inference data to generate output data (e.g., prediction or decision).

Step 6: If applicable, RAN Node 1 may send model performance feedback to the network node.

Step 7: RAN Node 1, RAN Node 2, and UE (or 'RAN Node 1 and UE', or 'RAN Node 1 and RAN Node 2') perform an action based on the output data. For example, in the case of load balancing operation, the UE may move from RAN node 1 to RAN node 2.

Step 8: RAN Node 1 and RAN Node 2 transmit feedback information to the network node.

FIG. 15 illustrates an application of a functional framework in a wireless communication system.

FIG. 15 illustrates a case where both the AI Model Training function and the AI Model Inference function are performed by a RAN node (e.g., base station, TRP, CU of the base station, etc.).

Step 1: The UE and RAN Node 2 transmit input data (i.e., Training data) for AI Model Training to RAN Node 1.

Step 2: RAN Node 1 trains the AI Model using the received training data.

Step 3: RAN Node 1 receives input data (i.e., Inference data) for AI Model Inference from the UE and RAN Node 2.

Step 4: RAN Node 1 performs AI Model Inference using the received Inference data to generate output data (e.g., prediction or decision).

Step 5: RAN Node 1, RAN Node 2, and the UE (or 'RAN Node 1 and UE', or 'RAN Node 1 and RAN Node 2') perform an action based on the output data. For example, in the case of load balancing operation, the UE may move from RAN node 1 to RAN node 2.

Step 6: RAN node 2 transmits feedback information to RAN node 1.

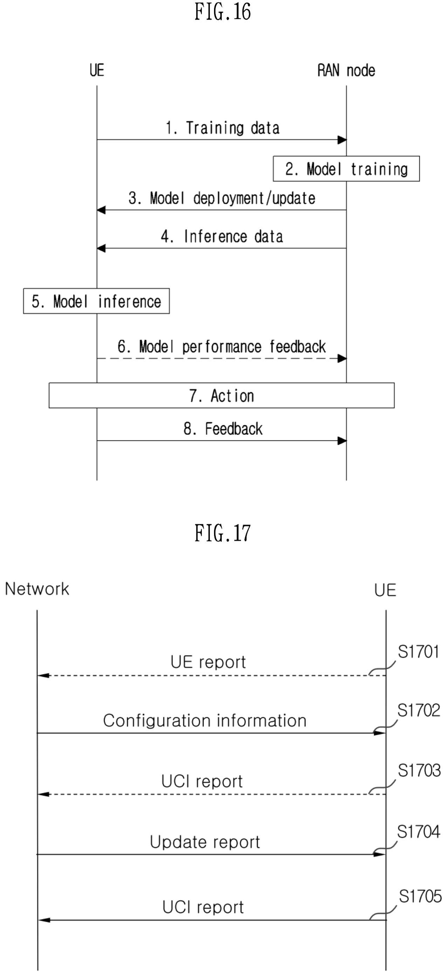

FIG. 16 illustrates an application of a functional framework in a wireless communication system.

FIG. 16 illustrates a case where the AI Model Training function is performed by a RAN node (e.g., base station, TRP, CU of the base station, etc.), and the AI Model Inference function is performed by the UE.

Step 1: The UE transmits input data (i.e., Training data) for AI Model Training to the RAN node. Here, the RAN node may collect data (e.g., measurements of the UE related to RSRP, RSRQ, SINR of the serving cell and neighboring cells, location of the UE, speed, etc.) from various UEs and/or from other RAN nodes.

Step 2: The RAN node trains the AI Model using the received training data.

Step 3: The RAN node distributes/updates the AI Model to the UE. The UE may continue to perform model training based on the received AI Model.

Step 4: The UE receives input data (i.e., Inference data) for AI Model Inference from the RAN node (and/or from other UEs).

Step 5: The UE performs AI Model Inference using the received Inference data to generate output data (e.g., prediction or decision).

Step 6: If applicable, the UE may transmit model performance feedback to the RAN node.

Step 7: The UE and the RAN node perform an action based on output data.

Step 8: The UE transmits feedback information to the RAN node.

CSI(channel state information)-related Operation

In an NR (New Radio) system, a CSI-RS(channel state information-reference signal) is used for time and/or frequency tracking, CSI computation, L1(layer 1)-RSRP(reference signal received power) computation and mobility. Here, CSI computation is related to CSI acquisition and L1-RSRP computation is related to beam management (BM).

CSI(channel state information) collectively refers to information which may represent quality of a radio channel (or also referred to as a link) formed between a terminal and an antenna port.

- To perform one of the usages of a CSI-RS, a terminal (e.g., user equipment, UE) receives configuration information related to CSI from a base station (e.g., general Node B, gNB) through RRC(radio resource control) signaling.

The configuration information related to CSI may include at least one of information related to a CSI-IM (interference management) resource, information related to CSI measurement configuration, information related to CSI resource configuration, information related to a CSI-RS resource or information related to CSI report configuration.

i) Information related to a CSI-IM resource may include CSI-IM resource information, CSI-IM resource set information, etc. A CSI-IM resource set is identified by a CSI-IM resource set ID (identifier) and one resource set includes at least one CSI-IM resource. Each CSI-IM resource is identified by a CSI-IM resource ID.

ii) Information related to CSI resource configuration may be expressed as CSI-ResourceConfig IE. Information related to a CSI resource configuration defines a group which includes at least one of an NZP(non zero power) CSI-RS resource set, a CSI-IM resource set or a CSI-SSB resource set. In other words, the information related to a CSI resource configuration may include a CSI-RS resource set list and the CSI-RS resource set list may include at least one of a NZP CSI-RS resource set list, a CSI-IM resource set list or a CSI-SSB resource set list. A CSI-RS resource set is identified by a CSI-RS resource set ID and one resource set includes at least one CSI-RS resource. Each CSI-RS resource is identified by a CSI-RS resource ID.

Parameters representing a usage of a CSI-RS (e.g., a 'repetition' parameter related to BM, a 'trs-Info' parameter related to tracking) may be configured per NZP CSI-RS resource set.

iii) Information related to a CSI report configuration includes a report configuration type (reportConfigType) parameter representing a time domain behavior and a report quantity (reportQuantity) parameter representing CSI-related quantity for a report. The time domain behavior may be periodic, aperiodic or semi-persistent.

- A terminal measures CSI based on the configuration information related to CSI.

The CSI measurement may include (1) a process in which a terminal receives a CSI-RS and (2) a process in which CSI is computed through a received CSI-RS and detailed description thereon is described after.

For a CSI-RS, RE(resource element) mapping of a CSI-RS resource in a time and frequency domain is configured by higher layer parameter CSI-RS-ResourceMapping.

- A terminal reports the measured CSI to a base station.

In this case, when quantity of CSI-ReportConfig is configured as 'none (or No report)', the terminal may omit the report. But, although the quantity is configured as 'none (or No report)', the terminal may perform a report to a base station. When the quantity is configured as 'none', an aperiodic TRS is triggered or repetition is configured. In this case, only when repetition is configured as 'ON', a report of the terminal may be omitted.

1) CSI Measurement

An NR system supports more flexible and dynamic CSI measurement and reporting. Here, the CSI measurement may include a procedure of receiving a CSI-RS and acquiring CSI by computing a received CSI-RS.

As a time domain behavior of CSI measurement and reporting, aperiodic/semi-persistent/periodic CM (channel measurement) and IM (interference measurement) are supported. 4-port NZP CSI-RS RE pattern is used for CSI-IM configuration.

CSI-IM based IMR of NR has a design similar to CSI-IM of LTE and is configured independently from ZP CSI-RS resources for PDSCH rate matching. In addition, each port emulates an interference layer having (a desirable channel and) a precoded NZP CSI-RS in NZP CSI-RS-based IMR. As it is about intra-cell interference measurement for a multi-user case, MU interference is mainly targeted.

A base station transmits a precoded NZP CSI-RS to a terminal in each port of configured NZP CSI-RS based IMR.

A terminal assumes a channel/interference layer and measures interference for each port in a resource set.

When there is no PMI and RI feedback for a channel, a plurality of resources are configured in a set and a base station or a network indicates a subset of NZP CSI-RS resources through DCI for channel/interference measurement.

A resource setting and a resource setting configuration are described in more detail.

2) Resource Setting

Each CSI resource setting 'CSI-ResourceConfig' includes a configuration for a S≥1 CSI resource set (given by a higher layer parameter csi-RS-ResourceSetList). A CSI resource setting corresponds to CSI-RS- resourcesetlist. Here, S represents the number of configured CSI-RS resource sets. Here, a configuration for a S≥1 CSI resource set includes each CSI resource set including CSI-RS resources (configured with a NZP CSI-RS or CSI-IM) and a SS/PBCH block (SSB) resource used for L1-RSRP computation.

Each CSI resource setting is positioned at a DL BWP(bandwidth part) identified by a higher layer parameter bwp-id. In addition, all CSI resource settings linked to a CSI reporting setting have the same DL BWP.

A time domain behavior of a CSI-RS resource in a CSI resource setting included in a CSI-ResourceConfig IE may be indicated by a higher layer parameter resourceType and may be configured to be aperiodic, periodic or semi-persistent. For a periodic and semi-persistent CSI resource setting, the number (S) of configured CSI-RS resource sets is limited to '1'. For a periodic and semi-persistent CSI resource setting, configured periodicity and a slot offset are given by a numerology of an associated DL BWP as given by bwp-id.

When UE is configured with a plurality of CSI-ResourceConfigs including the same NZP CSI-RS resource ID, the same time domain behavior is configured for CSI-ResourceConfig.

When UE is configured with a plurality of CSI-ResourceConfigs including the same CSI-IM resource ID, the same time domain behavior is configured for CSI-ResourceConfig.

One or more CSI resource settings for channel measurement (CM) and interference measurement (IM) are configured through higher layer signaling as follows.

- CSI-IM resource for interference measurement
- NZP CSI-RS resource for interference measurement
- NZP CSI-RS resource for channel measurement

In other words, a CMR (channel measurement resource) may be a NZP CSI-RS for CSI acquisition and an IMR(Interference measurement resource) may be a NZP CSI-RS for CSI-IM and IM.

In this case, CSI-IM(or a ZP CSI-RS for IM) is mainly used for inter-cell interference measurement.

In addition, an NZP CSI-RS for IM is mainly used for intra-cell interference measurement from multi-users.

UE may assume that CSI-RS resource(s) for channel measurement and CSI-IM / NZP CSI-RS resource(s) for interference measurement configured for one CSI reporting are 'QCL-TypeD' per resource.

3) Resource Setting Configuration

As described, a resource setting may mean a resource set list.

For aperiodic CSI, each trigger state configured by using a higher layer parameter CSI-AperiodicTriggerState is associated with one or a plurality of CSI-ReportConfigs that each CSI-ReportConfig is linked to a periodic, semi-persistent or aperiodic resource setting.

One reporting setting may be connected to up to 3 resource settings.

- When one resource setting is configured, a resource setting (given by a higher layer parameter resourcesForChannelMeasurement) is about channel measurement for L1-RSRP computation.
- When two resource settings are configured, a first resource setting (given by a higher layer parameter resourcesForChannelMeasurement) is for channel measurement and a second resource setting (given by csi-IM-ResourcesForInterference or nzp-CSI-RS -ResourcesForInterference) is for interference measurement performed in CSI-IM or a NZP CSI-RS.
- When three resource settings are configured, a first resource setting (given by resourcesForChannelMeasurement) is for channel measurement, a second resource setting (given by csi-IM-ResourcesForInterference) is for CSI-IM based interference measurement and a third resource setting (given by nzp-CSI-RS-ResourcesForInterference) is for NZP CSI-RS based interference measurement.

For semi-persistent or periodic CSI, each CSI-ReportConfig is linked to a periodic or semi-persistent resource setting.

- When one resource setting (given by resourcesForChannelMeasurement) is configured, the resource setting is about channel measurement for L1-RSRP computation.
- When two resource settings are configured, a first resource setting (given by resourcesForChannelMeasurement) is for channel measurement and a second resourece setting (given by a higher layer parameter csi-IM-ResourcesFor-Interference) is used for interference measurement performed in CSI-IM.

4) CSI Computation

When interference measurement is performed in CSI-IM, each CSI-RS resource for channel measurement is associated with a CSI-IM resource per resource in an order of CSI-RS resources and CSI-IM resources in a corresponding resource set. The number of CSI-RS resources for channel measurement is the same as the number of CSI-IM resources.
In addition, when interference measurement is performed in an NZP CSI-RS, UE does not expect to be configured with one or more NZP CSI-RS resources in an associated resource set in a resource setting for channel measurement.
A terminal configured with a higher layer parameter nzp-CSI-RS-ResourcesForInterference does not expect that 18 or more NZP CSI-RS ports will be configured in a NZP CSI-RS resource set.
For CSI measurement, a terminal assumes the followings.

- Each NZP CSI-RS port configured for interference measurement corresponds to an interference transmission layer.
- All interference transmission layers of an NZP CSI-RS port for interference measurement consider EPRE (energy per resource element) ratio.
- A different interference signal in RE(s) of an NZP CSI-RS resource for channel measurement, an NZP CSI-RS resource for interference measurement or a CSI-IM resource for interference measurement

5) CSI Report

For a CSI report, a time and frequency resource which may be used by UE are controlled by a base station.
CSI(channel state information) may include at least one of a channel quality indicator(CQI), a precoding matrix indicator(PMI), a CSI-RS resource indicator (CRI), a SS/PBCH block resource indicator (SSBRI), a layer indicator (LI), a rank indicator (RI) or L1-RSRP.
For CQI, PMI, CRI, SSBRI, LI, RI, L1-RSRP, a terminal is configured by a higher layer with N≥1 CSI-ReportConfig reporting setting, M≥1 CSI-ResourceConfig resource setting and a list of one or two trigger states (provided by aperiodicTriggerStateList and semiPersistentOnPUSCH-TriggerStateList). Each trigger state in the aperiodicTrigger-StateList includes a associated CSI-ReportConfigs list which indicates a channel and optional resource set IDs for interference. In semiPersistentOnPUSCH-TriggerStateList, one associated CSI-ReportConfig is included in each trigger state.
In addition, a time domain behavior of CSI reporting supports periodic, semi-persistent, aperiodic.

i) Periodic CSI reporting is performed in a short PUCCH, a long PUCCH. Periodicity and a slot offset of periodic CSI reporting may be configured by RRC and refers to a CSI-ReportConfig IE.
ii) SP(semi-periodic) CSI reporting is performed in a short PUCCH, a long PUCCH, or a PUSCH.

For SP CSI in a short/long PUCCH, periodicity and a slot offset are configured by RRC and a CSI report is activated/deactivated by separate MAC CE / DCI.
For SP CSI in a PUSCH, periodicity of SP CSI reporting is configured by RRC, but a slot offset is not configured by RRC and SP CSI reporting is activated/deactivated by DCI(format 0_1). For SP CSI reporting in a PUSCH, a separated RNTI(SP-CSI C-RNTI) is used.
An initial CSI report timing follows a PUSCH time domain allocation value indicated by DCI and a subsequent CSI report timing follows a periodicity configured by RRC.
DCI format 0_1 may include a CSI request field and activate/deactivate a specific configured SP-CSI trigger state. SP CSI reporting has activation/deactivation equal or similar to a mechanism having data transmission in a SPS PUSCH.
iii) Aperiodic CSI reporting is performed in a PUSCH and is triggered by DCI. In this case, information related to trigger of aperiodic CSI reporting may be delivered/indicated/configured through MAC-CE(medium access control-control element).

For AP CSI having an AP CSI-RS, AP CSI-RS timing is configured by RRC and timing for AP CSI reporting is dynamically controlled by DCI.

In NR, a method of dividing and reporting CSI in a plurality of reporting instances applied to a PUCCH based CSI report in LTE (e.g., transmitted in an order of RI, WB PMI/CQI, SB PMI/CQI) is not applied. Instead, in NR, there is a limit that a specific CSI report is not configured in a short/long PUCCH and a CSI omission rule is defined. In addition, regarding AP CSI reporting timing, a PUSCH symbol/slot location is dynamically indicated by DCI. In addition, candidate slot offsets are configured by RRC. For CSI reporting, a slot offset(Y) is configured per reporting setting. For UL-SCH, a slot offset K2 is separately configured.

2 CSI latency classes (low latency class, high latency class) are defined with regard to CSI computation complexity. Low latency CSI is WB CSI which includes up to 4 ports Type-I codebooks or up to 4 ports non-PMI feedback CSI. High latency CSI refers to CSI other than low latency CSI. For a normal terminal, (Z, Z') is defined in a unit of OFDM symbols. Here, Z represents the minimum CSI processing time until a CSI report is performed after receiving aperiodic CSI triggering DCI. In addition, Z' refers to the minimum CSI processing time until a CSI report is performed after receiving a CSI-RS for a channel/interference.

Additionally, a terminal reports the number of CSI which may be calculated at the same time.

Method for reporting uplink control information for dynamic functionality switching

In this disclosure, "/" means "and," "or," or "and/or," depending on the context. In this disclosure, "terminal" and "UE" may be used interchangeably with the same or similar meanings, and "base station," "network," and "transmission and reception point (TRP)" may also be used interchangeably with the same or similar meanings from an air-interface perspective.

The 3GPP Rel-18 AI/ML study item began a study on applying AI/ML technologies to the air interface between terminals and networks. The study considered beam management (BM), CSI acquisition, and positioning as key use cases for integrating AI/ML into the air interface. In this regard, various terminology is defined and discussed as follows. In particular, discussions began on methods for managing AI/ML models (e.g., life cycle management (LCM): model activation/deactivation, model switching/selection, model monitoring, model update/fine-tuning, fallback, etc.).

Table 6 provides examples of terminology to be used in the AI/ML study item.

[Table 6]

| Terminology | Description |
|---|---|
| Data collection | A process of collecting data by the network nodes, management entity, or UE for the purpose of AI/ML model training, data analytics and inference. |
| AI/ML Model | A data driven algorithm that applies AI/ML techniques to generate a set of outputs based on a set of inputs. |
| AI/ML model training | A process to train an AI/ML Model [by learning the input/output relationship] in a data driven manner and obtain the trained AI/ML Model for inference. |
| AI/ML model Inference | A process of using a trained AI/ML model to produce a set of outputs based on a set of inputs. |
| AI/ML model validation | A subprocess of training, to evaluate the quality of an AI/ML model using a dataset different from one used for model training, that helps selecting model parameters that generalize beyond the dataset used for model training. |
| AI/ML model testing | A subprocess of training, to evaluate the performance of a final AI/ML model using a dataset different from one used for model training and validation. Differently from AI/ML model validation, testing does not assume subsequent tuning of the model. |
| UE-side (AI/ML) model | An AI/ML Model whose inference is performed entirely at the UE. |
| Network-side (AI/ML) model | An AI/ML Model whose inference is performed entirely at the network. |
| One-sided (AI/ML) model | A UE-side (AI/ML) model or a Network-side (AI/ML) model. |

(continued)

| Terminology | Description |
|---|---|
| Two-sided (AI/ML) model | A paired AI/ML Model(s) over which joint inference is performed, where joint inference comprises AI/ML Inference whose inference is performed jointly across the UE and the network, i.e, the first part of inference is firstly performed by UE and then the remaining part is performed by gNB, or vice versa. |
| AI/ML model transfer | Delivery of an AI/ML model over the air interface, either parameters of a model structure known at the receiving end or a new model with parameters. Delivery may contain a full model or a partial model. |
| Model download | Model transfer from the network to UE. |
| Model upload | Model transfer from UE to the network. |
| Federated learning / federated training | A machine learning technique that trains an AI/ML model across multiple decentralized edge nodes (e.g., UEs, gNBs) each performing local model training using local data samples. The technique requires multiple interactions of the model, but no exchange of local data samples. |
| Offline field data | The data collected from field and used for offline training of the AI/ML model. |
| Online field data | The data collected from field and used for online training of the AI/ML model. |
| Model monitoring | A procedure that monitors the inference performance of the AI/ML model. |
| Supervised learning | A process of training a model from input and its corresponding labels. |
| Unsupervised learning | A process of training a model without labelled data. |
| Semi-supervised learning | A process of training a model with a mix of labelled data and unlabelled data. |
| Reinforcement Learning (RL) | A process of training an AI/ML model from input (a.k.a. state) and a feedback signal (a.k.a. reward) resulting from the model's output (a.k.a. action) in an environment the model is interacting with. |
| Model activation | enable an AI/ML model for a specific function. |
| Model deactivation | disable an AI/ML model for a specific function. |
| Model switching | Deactivating a currently active AI/ML model and activating a different AI/ML model for a specific function. |
| Online training | An AI/ML training process where the model being used for inference) is (typically continuously) trained in (near) real-time with the arrival of new training samples.<br>Note: the notion of (near) real-time vs. non real-time is context-dependent and is relative to the inference time-scale.<br>Note: This definition only serves as a guidance. There may be cases that may not exactly conform to this definition but could still be categorized as online training by commonly accepted conventions.<br>Note: Fine-tuning/re-training may be done via online or offline training. (This note could be removed when we define the term fine-tuning.) |
| Offline training | An AI/ML training process where the model is trained based on collected dataset, and where the trained model is later used or delivered for inference.<br>Note: This definition only serves as a guidance. There may be cases that may not exactly conform to this definition but could still be categorized as offline training by commonly accepted conventions. |
| AI/ML model delivery | A generic term referring to delivery of an AI/ML model from one entity to another entity in any manner. |

(continued)

| Terminology | Description |
|---|---|
|  | Note: An entity could mean a network node/function (e.g., gNB, LMF, etc.), UE, proprietary server, etc. |
| Proprietary-format models | ML models of vendor-/device-specific proprietary format, from 3GPP perspective. NOTE: An example is a device-specific binary executable format |
| Open-format models | ML models of specified format that are mutually recognizable across vendors and allow interoperability, from 3GPP perspecive. |
| Model identification | A process/method of identifying an AI/ML model for the common understanding between the NW and the UE. Note: The process/method of model identification may or may not be applicable. Note: Information regarding the AI/ML model may be shared during model identification. |
| Functionality identification | A process/method of identifying an AI/ML functionality for the common understanding between the NW and the UE. Note: Information regarding the AI/ML functionality may be shared during functionality identification. FFS: granularity of functionality |
| Model update | Process of updating the model parameters and/or model structure of a model. |
| Model parameter update | Process of updating the model parameters of a model. |

The descriptions of the terminologies exemplified in Table 6 above can be applied to describe the method proposed in this disclosure.
Table 7 exemplifies the agreements discussed in the AI/ML study items.

[Table 7]

| Agreement |
|---|
| For UE-part/UE-side models, study the following mechanisms for LCM procedures: - For functionality-based LCM procedure: indication of activation/deactivation/switching/fallback based on individual AI/ML functionality Note: UE may have one AI/ML model for the functionality, or UE may have multiple AI/ML models for the functionality. FFS: Whether or how to indicate Funtionality - For model-ID-based LCM procedure, indication of model selection/activation/deactivation/switching/fallback based on individual model IDs |
| Agreement For UE-side models and UE-part of two-sided models: - For AI/ML functionality identification Reuse legacy 3GPP framework of Features as a starting point for discussion. UE indicates supported functionalities/functionality for a given sub-use-case. UE capability reporting is taken as starting point. - For AI/ML model identification Models are identified by model ID at the Network. UE indicates supported AI/ML models. - In functionality-based LCM Network indicates activation/deactivation/fallback/switching of AI/ML functionality via 3GPP signaling (e.g., RRC, MAC-CE, DCI). Models may not be identified at the Network, and UE may perform model-level LCM. Study whether and how much awareness/interaction NW should have about model-level LCM |

(continued)

| |
|---|
| - In model-ID-based LCM, models are identified at the Network, and Network/UE may activate/deactivate/select/switch individual AI/ML models via model ID.<br>FFS: Relationship between functionality identification and model identification<br>FFS: Performance monitoring and RAN4 impact<br>FFS: detailed understanding on model<br>Agreement<br>- AI/ML-enabled Feature refers to a Feature where AI/ML may be used.<br>Agreement<br>- For functionality identification, there may be either one or more than one Functionalities defined within an AI/ML-enabled feature. |

Referring to Table 7, for UE-part/UE-side models (wherein, UE-part model means UE part in a two-sided model, and UE-side model means one-sided model in which AI is implemented only in the UE), mechanisms for LCM procedures have been agreed upon. For functionality-based LCM procedure: Indication of activation/deactivation/switching/fallback based on individual AI/ML functionality. Here, the UE may have more than one AI/ML model for functionality. For model-ID-based LCM procedure: Indication of model selection/activation/deactivation/switching/fallback based on individual model IDs.

In addition, for the UE-side model and the UE-part of the two-sided model, the following agreements were reached regarding AI/ML model identification. For AI/ML functionality identification, the framework of legacy 3GPP features is reused, and the UE indicates the supported functionality for a given sub-use-case. For AI/ML model identification, models are identified in the network by model ID, and the UE indicates the supported AI/ML model. For functionality-based LCM, the network indicates the activation/deactivation/fallback/switching of AI/ML functionality via 3GPP signaling (e.g., RRC, MAC-CE, DCI). Additionally, the model may not be identified by the network, and the UE may perform model-level LCM. In Model-ID(identifier)-based LCM, models are identified in the network, and the network/UE can activate/deactivate/fallback/switch individual AI/ML models through the model ID.

Additionally, AI/ML-enabled features are referred to as features that can be used with AI/ML. For functional identification, one or more functionalities can be defined within an AI/ML-enabled feature.

As described above, two approaches/methods for model management are being discussed for the UE-side model and the UE-part of the two-sided model.

First, the functionality-based approach focuses on the functions or performance supported by the application of AI/ML models. Signaling related to these functionalities, such as activation/deactivation/switching/fallback, is currently being discussed as a subject for standardization.

Next, the model-based approach focuses on signaling related to activation/deactivation/switching/fallback for AI/ML models, as a subject for standardization.

The biggest difference between the two methods above is as follows. When a terminal implements multiple AI/ML models for the same functionality according to various environments/scenarios to which the functionality can be applied, related base station settings, etc., i) in the case of model-based LCM, which model is activated/deactivated/selected/switched is directly managed, whereas ii) in the case of functionality-based LCM, since activation/deactivation/monitoring, etc. are performed from the perspective of function/performance for the corresponding model, the network (NW: network) may not necessarily need to know how many models the terminal has implemented and how. The entity monitoring the model/functionality for the UE-part/side model can be the UE and/or NW, and the entity deciding/performing the activation/deactivation/selection/switching/update of the model/functionality can also be the UE and/or NW. As an example of a joint UE-NW approach, one could consider a method where the UE recommends/reports its model selection/update decisions to the NW, with the NW then performing the final confirmation/decision on those decisions. Involving the NW in the LCM process in this way inevitably leads to signaling between the UE and NW.

The following illustrates LCM signaling between a UE and a network.

1) UE-to-network signaling

- Model/functionality performance (monitoring) related information/measurements
- Recommendations/preferences related to model/functionality selection/activation/deactivation/switching/update/monitoring/fallback, etc.
- Acknowledgements for NW commands/recommendations related to model/functionality selection/activation/deactivation/switching/update/monitoring/fallback, etc.

2) Signaling from NW to UE

- Information/measurements related to model/functionality performance (monitoring)
- Commands/recommendations related to model/functionality selection/activation/deactivation/switching/update/monitoring/fallback, etc.

Furthermore, a terminal can implement a single AI/ML-enabled feature or sub-use case through multiple functionality/models. For example, to implement a single AI/ML-enabled feature, time-domain prediction-based CSI reporting, different AI/ML models can be implemented for each operating environment/scenario. Furthermore, AI/ML models implemented in different environments/scenarios may have different functions/performance/functionality, thus defining multiple functionality.

Here, there may be various aspects regarding the criteria by which functionality may be divided. For example, functionality may be divided based on criteria such as feature enabling/triggering conditions, feature performance, and the granularity/concept of feature groups defined within 3GPP UE features.

Hereinafter, in the description of the present disclosure, for the convenience of explanation, it is assumed that any AI/ML-enabled feature is implemented with M AI/ML models and N functionalities. Here, $M \geq N \geq 1$, and one or more models can be mapped/correspond to one functionality. For example, for time domain prediction based CSI/beam report, it can be divided into N functionalities based on maximum predictable time instance or supported CSI/beam report settings (parameters). As another example, for spatial domain beam prediction, it can be divided into N functionalities based on supported granularity/size/configuration of set A (given granularity/size/configuration of set B). Here, set A means a beam RS set for DL beam prediction, and set B means a beam RS set for DL beam measurement. As another example, it can be divided into N functionalities based on the supported positioning accuracy/configuration. As another example, it can be divided into N functionalities related to the supported CSI codebook construction/configuration for CSI compression. Furthermore, in the above examples, one functionality can be configured/implemented with multiple AI/ML models that are each trained according to the operating scenario/environment, etc. Alternatively, it can be configured/implemented with a single model trained in various scenarios/environments.

The UCI (uplink control information) reporting method supported by the current 3GPP standard has the following limitations/disadvantages when a single AI/ML enabled feature is implemented with multiple functionalities (or multiple models). According to the current 3GPP standard, UCI report values and reporting operations (e.g., period, time) are mostly configured by RRC messages. Therefore, considering the case where a change in functionality/model occurs, (1) a separate report is configured by RRC for each functionality/model (e.g., multiple CSI/beam reports are configured), and then specific reports can be selectively activated/triggered by MAC-CE/DCI (e.g., aperiodic/semi-persistent CSI/beam report), or (2) the reporting-related configuration must be changed through RRC reconfiguration (e.g., periodic CSI/beam report). In the case of the above (1), there is a disadvantage that the signaling overhead is large, and in the case of the above (2), there is a disadvantage that not only the signaling overhead due to RRC reconfiguration but also the delay (latency) until the reconfiguration is completed is large.

The present disclosure proposes the following methods to solve the above problem.

Embodiment 1: For one UCI report (i.e., one UCI report configuration) configured by higher layer signaling (e.g., RRC signaling), some of the reporting configurations (setting values) can be changed to lower layer signaling (e.g., MAC-CE and/or DCI) (according to changes in functionality/model).

Embodiment 1-1: For one or more specific configuration parameters for a single UCI report, multiple configuration candidate values (e.g., candidate values to be applied for each configuration/functionality/model ID) or a range of corresponding setting values may be configured by higher layer signaling (e.g., RRC signaling), and a specific setting value (or corresponding ID) may be designated by lower layer signaling (e.g., MAC-CE and/or DCI).

Here, if there is no lower layer signaling (e.g., MAC-CE and/or DCI) for the corresponding report parameter, a specific default setting value (or ID) to be used by the UE may be additionally configured/specified.

Embodiment 1-2: The setting values for one or more specific configuration parameters for a UCI report may be indicated by lower layer signaling (e.g., MAC-CE and/or DCI).

Here, when the configuration is performed by higher layer signaling (e.g., RRC signaling) for the UCI report, the setting values for the one or more parameters may not be indicated/configured, or a default/initial setting value (or ID) (to be applied until the first lower layer signaling (e.g., MAC-CE and/or DCI) indication is applied) may be indicated/configured.

In the above Embodiment 1, the time point at which the value designated by the lower layer signaling (e.g., MAC-CE and/or DCI) is applied may be agreed upon between the NW and the UE or may be defined/configured in advance.

For example, the time point at which the value designated by the lower layer signaling (e.g., MAC-CE and/or DCI) is applied may be i) a time point at which a specific time offset (e.g., T slots/symbols/msec, etc.) has elapsed since the lower layer signaling (e.g., MAC-CE and/or DCI) is transmitted/received, or ii) a time point at which a specific time offset (e.g., T slots/symbols/msec, etc.) has elapsed since the UE transmits/receives a response message/signal to the lower layer signaling (e.g., MAC-CE and/or DCI) (e.g., HARQ-ACK for a PDSCH carrying MAC-CE, ACK for a PDCCH carrying DCI, etc.).

Here, the T value can be a specific value defined as a common value for UEs (e.g., T=0, T=x symbols, T=y msec) or a value that the base station can configure specifically for the UE. If configured as a UE-specific value, the (minimum) T value supported by the UE can be reported from the UE to the base station (e.g., in the form of a UE capability report).

In addition, the setting value indicated by lower layer signaling (e.g., MAC-CE and/or DCI) in Embodiment 1 may be a direct indication/configuration of the value, or a value set indirectly (i.e., linked to a specific ID (identifier) that has been defined/configured/reported. For example, if an ID is assigned for a functionality or model, the setting value for the parameter associated with the ID can be linked/mapped. In this case, parameter setting changes for the corresponding report value can be performed by performing an indication for the corresponding ID through lower layer signaling (e.g., MAC-CE and/or DCI). This ID can be understood/interpreted as an ID for the configuration (e.g., configuration ID) or an ID related to UE capability.

In addition, in Embodiment 1, the information related to the setting values indicated by the lower layer signaling (e.g., MAC-CE and/or DCI) (e.g., functionality/model/configuration ID) may be information indicated separately from the trigger/activate/deactivate indication for the UCI report, or may be information indicated together with the UCI report. As an example of the latter, the information related to the setting values may be included and indicated in the MAC-CE that activates the semi-persistent CSI report on the PUCCH. As another example, the information related to the setting values may be included and indicated in the DCI that triggers the aperiodic CSI report.

Embodiment 1 can be applied when the function/functionality/model of the NW dynamically changes for a single feature according to the NW-sided AI/ML implementation, and can also be applied when the function/functionality/model of the UE dynamically changes according to the UE-sided AI/ML implementation. Similarly, for a two-sided AI/ML implementation, Embodiment 1 can be applied when the UCI report changes according to the change in the function/functionality/model of the NW and/or the UE. By applying Embodiment 1, instead of configuring multiple UCI reports as compared to the existing method, a single UCI report is configured, and one or more parameters for the single UCI report are dynamically changed, thereby significantly reducing the signaling overhead, and in particular, parameters can be adaptively changed without RRC reconfiguration for periodic UCI reports.

In addition, when applying Embodiment 1, the required (reported) (maximum) UCI payload size may change due to dynamic changes in the reporting setting values (i.e., settings of some parameters within the UCI reporting settings). For example, in the case of spatial domain beam prediction, the sizes of Set A and/or Set B may change, and thus the required UCI payload size may change. As another example, in the case of CSI compression, the compression ratio may change, and thus the required UCI payload size may change.

As a solution to this, the UCI bit configuration can be configured to match the worst case, i.e., the maximum UCI payload size, and then some bits or codepoints may not be used when transmitting UCI that requires a smaller payload. For example, in the case of spatial domain beam prediction, the size of the CRI/SSB resource indicator (SSBRI) field can be configured to match the maximum possible Set A size.

As another solution, separate rules related to UCI prioritization and/or omission may be defined/configured. For example, the UCI payload may exceed the maximum size that can be transmitted on the allocated PUCCH/PUSCH resources due to the parameter change indication (e.g., by MAC-CE/DCI). In this case, the UE may omit some information in the UCI or perform specific UCI reporting (e.g., perform a fallback report, report that the UCI payload capacity is exceeded). As another example, in case of CSI compression-based CSI reports, the UCI payload may exceed the maximum size that can be transmitted on the allocated PUCCH/PUSCH resources as the compression ratio decreases and/or the CSI payload increases due to other requirements (e.g., an increase in rank). In this case, the UE may report that the UCI payload capacity is exceeded through a specific field or combination of fields in the UCI, and/or operate in a prescribed fallback report mode (e.g., legacy CSI report with a specific configuration (e.g., Type-1 codebook)), and/or transmit by omitting some of the information to be included in the UCI (e.g., omitting information about specific subband(s), time instance(s), and/or space/time domain basis(s)).

In addition, an embodiment that can be applied separately or together with Embodiment 1 (for UE-side/part AI/ML) is proposed.

Embodiment 2: A UE may report to a network (e.g., a base station) changes in capability/functionality/model. Here, the setting values for some UCI reporting parameters may change in conjunction with the reported information.

Embodiment 2-1: The parameter configurations may change from a specific agreed/configured point in time after the reporting time for capability/functionality/model changes.

Embodiment 2-2: UCI reporting and reporting for capability/functionality/model changes may be performed simultaneously.

In Embodiment 2, reporting related to a change in UE's capability/functionality/model can be performed in various forms. For example, the UE can report to the NW the capability/functionality/model(s) supported by the UE (e.g., ID of the capability/functionality/model(s)) and/or the setting value(s) for the reporting parameter (for each capability/functionality/model). Then, when an ID is assigned to each capability/functionality/model, periodic/aperiodic/semi-persistent reporting triggered by the base station in relation to the corresponding ID (or change in the corresponding ID) can be performed, or event-based reporting (e.g., reporting to MAC-CE only when a change in the ID occurs) can be performed. As another example, for reports related to changes in the capability/functionality/model of the UE, direct reports on changes in the reporting parameter values/information supported by the UE (e.g., changes in maximum/minimum values/ranges, granularity changes, field size changes, RS set related changes, etc.) may be performed.

In Embodiment 2, the setting value for the UCI report may be automatically changed by the change in the function/capability/functionality/model of the UE-side/part AI/ML. Here, the setting value to be applied for each capability/functionality/model (e.g., ID of the capability/functionality/model(s)) for the parameter for the corresponding UCI report may be prescribed/defined or configured by the base station. Alternatively, the value may not be prescribed/set, and the value reported by the UE (e.g., reporting the setting value to be applied for each capability/functionality/model (e.g., ID of the capability/functionality/model(s)) through the UE capability report) may be directly applied. In this case, the base station may not indicate the setting value for the corresponding parameter, or may only indicate the default/initial setting value (to be applied until the parameter setting value for the report related to the first capability/functionality/model change is applied).

Embodiment 2-1 corresponds to a method in which UE reporting related to capability/functionality/model changes is performed separately from the UCI reporting according to Embodiment 1. In this case, the specific agreed/configured point in time (i.e., the point in time when the parameter setting value for the UCI report changes) may be i) a point in time that has passed by a specific time offset (e.g., T slots/symbols/msec, etc.) after the reporting point in time related to the capability/functionality/model change, or ii) a point in time that has passed by a specific time offset (e.g., T slots/symbols/msec, etc.) after the base station's transmission/reception of a response message/signal to the UE report related to the capability/functionality/model change (e.g., an indication from the network to switch/indicate an ID for the capability/functionality/model/configuration, an indication from the network to switch/indicate a specific value (range) for the reporting parameter, scheduling a PUSCH transmission with the same HARQ process number as the PUSCH transmission for reporting capability/functionality/model, and receiving a PDCCH carrying a DCI format with a toggled New Data Indicator (NDI) field value, etc.).

Here, the T value may be a specific value defined as a common value for UEs (e.g., T=0, T=x symbols, T=y msec) or a value that the base station can configure specifically for the UE. When configured to a UE-specific value, the (minimum) T value supported by the UE may be reported from the UE to the base station (e.g., in the form of a UE capability report).

Here, in Embodiment 2-1, information related to capability/functionality/model changes (or a channel carrying the information) may have a higher priority than UL data (e.g., UL-SCH (uplink shared channel)) and/or CSI/beam information (or a channel carrying CSI/beam information). Here, the priority may be used for an operation of preferentially dropping/omitting information/channels with lower priorities when channel/symbol overlap occurs.

Embodiment 2-2 corresponds to a method in which UCI reporting and reporting related to capability/functionality/model changes are performed together. The parameter setting values for the corresponding UCI report can be automatically applied and reported in conjunction with the reporting information related to capability/functionality/model changes. To this end, a reporting field related to capability/functionality/model changes can be added to the UCI information configuration (e.g., capability/functionality/model ID field, parameter setting ID field, etc.). In this case, since the configuration and/or size of another UCI payload can be changed by the field, when the UCI is encoded in two parts, the field can be configured to be included in part-1.

Meanwhile, similar to Embodiment 2, in Embodiment 1 (i.e., according to a combination of Embodiments 1 and 2), the UE may report a report related to a change in capability/functionality/model to the base station. In this case, the UCI reporting setting value may be changed to a lower layer signal (e.g., MAC-CE and/or DCI) according to the report related to the change in capability/functionality/model. If an ID related to capability/functionality/model/configuration is introduced/defined and the UCI reporting setting value is linked/mapped to the corresponding ID, the UE's capability/functionality/model change report may be performed based on the ID, and the operation of Embodiment 1 (i.e., change in the related UCI reporting setting value) may be performed by a confirmation/ACK indication from the base station for the corresponding report. Alternatively, the operation of Embodiment 1 (i.e., change in the related UCI reporting setting value) may also be performed by a corresponding ID indication from the base station.

Meanwhile, in the above-described Embodiment 1 and/or Embodiment 2, the UCI report may be a UCI report on PUCCH/PUSCH or may be a report via MAC-CE.

FIG. 17 illustrates a signaling procedure between a network and a UE for a method for transmitting and receiving uplink control information according to an embodiment of the present disclosure.

FIG. 17 illustrates signaling between a network (e.g., TRP 1, TRP 2) and a terminal (i.e., UE) in a situation of multiple TRPs (i.e., M-TRP, or multiple cells, hereinafter, all TRPs can be replaced with cells) to which the methods proposed in the present disclosure can be applied.

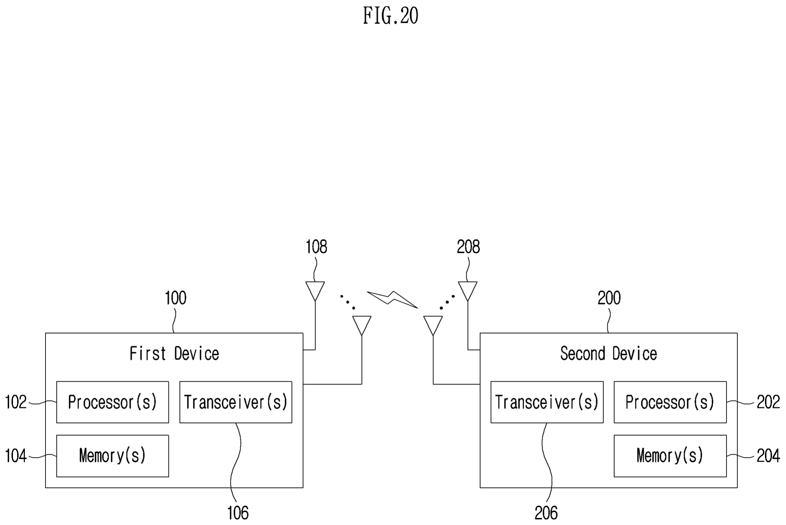

Here, UE/Network is merely an example and can be replaced with various devices, as described in FIG. 20 below. FIG. 17 is merely for convenience of explanation and does not limit the scope of the present disclosure. In addition, some of the steps shown in FIG. 17 may be omitted depending on the circumstances and/or settings.

In the following description, the Network may be one base station including multiple TRPs, and may be one cell including multiple TRPs. For example, an ideal/non-ideal backhaul may be configured between TRP 1 and TRP 2 constituting the Network. In addition, the following description is based on multiple TRPs, but this can be equally extended and applied to transmission through multiple panels. In addition, in the present disclosure, an operation of a UE receiving a signal from TRP1/TRP2 can also be interpreted/described (or can be an operation) as an operation of the UE receiving a signal from the Network (via/using TRP1/2), and an operation of the UE transmitting a signal to TRP1/TRP2 can also be interpreted/described (or can be an operation) as an operation of the UE transmitting a signal to the Network (via/using TRP1/TRP2), and vice versa.

In addition, as described above, "TRP" may be applied by replacing it with expressions such as panel, antenna array, cell (e.g., macro cell / small cell / pico cell, etc.), transmission point (TP), base station (gNB, etc.). As described above, TRP may be distinguished according to information (e.g., index, identifier (ID)) on a CORESET group (or CORESET pool). For example, when one UE is configured to perform transmission and reception with multiple TRPs (or cells), this may mean that multiple CORESET groups (or CORESET pools) are configured for one UE. Such configuration of a CORESET group (or CORESET pool) may be performed through higher layer signaling (e.g., RRC signaling, etc.). Additionally, a base station may be a general term for an object that transmits and receives data with a UE. For example, the base station may be a concept that includes one or more Transmission Points (TPs), one or more Transmission and Reception Points (TRPs), etc. Additionally, the TPs and/or TRPs may include a panel of the base station, a transmission and reception unit, etc.

Referring to FIG. 17, for convenience of explanation, signaling between a single network (e.g., a base station) and a UE is considered, but the signaling method can be extended and applied to signaling between multiple TRPs and multiple UEs.

Referring to FIG. 17, a UE can transmit a UE report to the network (S1701).

Here, according to Embodiment 2, the UE may perform an operation of transmitting information about the capabilities of the UE and/or information about the AI/ML model (related to the UCI report) and/or information about the related feature/functionality to the network, and such information may be collectively referred to as UE information. For example, the UE may report, as UE information, the supported setting value(s), the range of the setting values, and/or the related ID(s) for a specific parameter for the corresponding feature. Such UE repor may be reported periodically/aperiodic/semi-continuously, or may be reported event-based (i.e., whenever a change in information occurs).

In addition, according to Embodiment 2, based on (e.g., in conjunction with) a UE report regarding a change in the capability of the UE and/or the AI/ML function and/or model related to the UCI report, setting values for one or more parameters among a plurality of parameters related to the UCI report (i.e., the operation of the UCI report and/or the content of the UCI report, etc.) may be changed.

Here, the configurations for the one or more parameters for the UCI report may be automatically applied based on (e.g., in conjunction with) the UE report regarding the capability of the UE and/or the change in the AI/ML function and/or model related to the UCI report. For example, according to Embodiment 2-1, the setting values for the one or more parameters may be changed from a specific offset after the reporting time of the UE report or the reception of a response from the network (e.g., a base station) to the UE report. Alternatively, according to Embodiment 2-2, the UE report and the UCI report may be transmitted together.

In addition, according to a combination of Embodiments 1 and 2, the UE performs an operation of transmitting the UE report, and based on the UE report regarding a change in the capability of the UE and/or an AI/ML function and/or model related to the UCI report (e.g., in conjunction with), the network (e.g., a base station) can transmit lower layer signaling to the UE to change setting values for one or more parameters related to the UCI report.

In the following description of FIG. 17, for convenience of explanation, it is assumed that an operation of transmitting a UE report by a UE and an operation of transmitting lower layer signaling for changing setting values for one or more parameters related to a UCI report by a network are performed according to a combination of Embodiments 1 and 2.

However, according to Embodiment 1, the operation of performing UE reporting by the UE may not be performed, and according to Embodiment 2, the setting values for one or more parameters related to UCI reporting may be automatically changed according to the UE report by the UE.

A network transmits configuration information to a UE (S1702).

Here, the configuration information may be transmitted via higher layer signaling (e.g., RRC signaling).

Additionally, the configuration information may include configuration information related to a UCI report according to Embodiment 1. For example, it may include CSI report configuration information.

In addition, according to Embodiment 1, the configuration information may include setting values for multiple parameters related to the UCI report (e.g., by ID (e.g., AI/ML functionality ID and/or model ID)), multiple configuration candidate values, ranges of setting values, and/or a default/initial setting value. In addition, based on the UE report reported in step S1701, configuration information for related AI/ML functionality and/or model may be included.

A UE may transmit a UCI report to a network based on configuration information (S1703).

Here, UCI refers to control information transmitted by the UE to the network (e.g., a base station). For example, it may include, but is not limited to, at least one of SR, HARQ-ACK, and/or CSI.

In addition, UCI may be transmitted via a physical channel (e.g., PUCCH and/or PUSCH) or via MAC CE.

In addition, although not illustrated in FIG. 17, prior to transmitting a UCI report, the network may indicate the UE to trigger/enable/deactivate the UCI report.

The network transmits a report update to the UE (S1704).

Here, the term report update is for convenience of explanation, and the present disclosure is not limited thereto. That is, the report update may mean information for changing the setting value of one or more parameters among the plurality of parameters related to the UCI report in the configuration information of step S1702, and may be transmitted via lower layer signaling (e.g., MAC-CE and/or DCI). In other words, the setting value of one or more parameters among the plurality of parameters related to the UCI report may be changed by lower layer signaling (e.g., MAC-CE and/or DCI) without resetting the configuration information by upper layer signaling (e.g., RRC signaling). That is, for one UCI report set by the configuration information, the setting values of some parameters for the UCI report may be set/indicated by lower layer signaling without reconfiguring other UCI reports by higher layer signaling.

Here, according to Embodiment 1, the configuration information may include a plurality of candidate setting values or a range of setting values for the one or more parameters, and a setting value for the one or more parameters may be indicated within the plurality of candidate setting values or the range of setting values by lower layer signaling (i.e., report update).

Alternatively, according to Embodiment 1, the configuration information may not include setting values for the one or more parameters or may include a default value, and the setting values for the one or more parameters may be indicated by lower layer signaling.

In addition, according to Embodiment 1, the setting values (i.e., report update) for the one or more parameters may be applied from a point in time after a specific offset after the reception (or transmission by the network) of the lower layer signaling or the transmission (or reception by the network) of the UE's response to the lower layer signaling.

Furthermore, according to Embodiment 1, the setting values for the one or more parameters may be explicitly indicated by the lower layer signaling or indirectly indicated by indicating a specific identifier (ID) associated with the UCI report (e.g., a functionality ID or model ID associated with the UCI report).

The UE transmits a UCI report to a network based on configuration information (S1705).

Here, as described above, UCI refers to control information transmitted by the UE to the network (e.g., a base station), and may include, but is not limited to, at least one of SR, HARQ-ACK, and/or CSI.

Additionally, UCI may be transmitted via a physical channel (e.g., PUCCH and/or PUSCH) or via MAC CE.

Additionally, although not illustrated in FIG. 17, the network may indicate the UE to trigger/enable/deactivate the UCI report prior to transmitting the UCI report. Furthermore, according to Embodiment 1 described above, the UCI report may be triggered/activated in lower-layer signaling for indicating/changing the setting values for one or more parameters among the plurality of parameters related to the UCI report. Alternatively, lower-layer signaling for triggering/activating the UCI report may be transmitted to the UE separately from the lower-layer signaling for indicating/changing the setting values for one or more parameters among the plurality of parameters associated with the UCI report.

Here, according to Embodiment 1, UCI reporting may be performed based on the setting values of parameters configured by the configuration information and also based on the setting values of parameters set by report update (i.e., indication/change for one or more parameter setting values by lower layer signaling). In addition, according to Embodiment 2 (i.e., step S1704 is omitted), UCI reporting may be performed based on the setting values of parameters set by the configuration information and also based on the setting values of parameters determined according to changes in UE capability/functionality/model according to the UE report by the UE.

In addition, according to Embodiment 1, the payload size of the UCI report may be configured to a maximum, and some bits or code points in the payload of the UCI report may not be used based on a change in setting values for the one or more parameters. Alternatively, based on a change in setting values for the one or more parameters causing the payload size of the UCI report to exceed resources allocated for transmission of the UCI report, some information in the UCI report may be omitted or specific predefined information in the UCI report (e.g., fallback report, UCI payload capacity exceeded status) may be included.

In addition, according to a combination of Embodiments 1 and 2, the network may change the setting values for the one or more parameters based on a UE report regarding a change in AI/ML function and/or model related to the UE's capability and/or the UCI report by the UE, in which case the network may indicate the UE to change the setting values for the one or more parameters by lower layer signaling (i.e., report update).

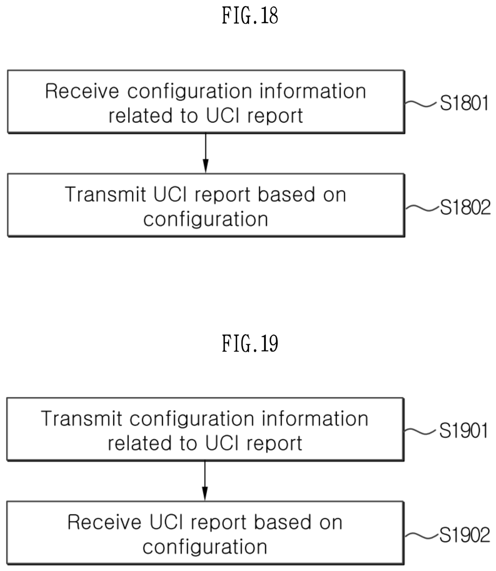

FIG. 18 is a diagram illustrating an operation of a UE for a method for transmitting and receiving uplink control information according to an embodiment of the present disclosure.

FIG. 18 illustrates an operation of a UE based on the previously proposed method. The example of FIG. 18 is provided for convenience of explanation and does not limit the scope of the present disclosure. Some step(s) illustrated in FIG. 18 may be omitted depending on circumstances and/or settings. In addition, the UE in FIG. 18 is only an example and may be implemented as a device illustrated in FIG. 20 below. For example, the processor (102/202) of FIG. 20 may control the transceiver (106/206) to transmit and receive channels/signals/data/information, etc., and may also control the processor (102/202) of Fig. 20 to store transmitted or received channels/signals/data/information, etc. in a memory (104/204).

Here, although not shown in FIG. 18, the UE may transmit to the base station information about the UE's capabilities and/or information about the AI/ML model (related to UCI reporting) and/or related feature/functionality, and such information may be collectively referred to as UE information. For example, the UE may report, as UE information, the supported setting value(s), the range of the setting values, and/or the related ID(s) for a specific parameter for the feature. Such UE report may be reported periodically/aperiodic/semi-continuously, or may be reported event-based (i.e., whenever a change in information occurs).

Referring to FIG. 18, a UE receives configuration information related to a UCI report from a base station (S1801).

Here, the configuration information may be transmitted via higher layer signaling (e.g., RRC signaling). For example, it may include CSI report configuration information.

In addition, according to Embodiment 1, the configuration information may include setting values for a plurality of parameters related to the UCI report (e.g., operation of UCI reporting and/or content within UCI reporting), a plurality of setting candidate values, a range of setting values, and/or a default/initial setting value, etc. In addition, based on the UE report reported in step S1701, configuration information for related AI/ML functionality and/or model may be included.

A UE transmits a UCI report to a base station based on configuration information (S1802).

Here, UCI refers to control information transmitted by the UE to the base station. For example, it may include, but is not limited to, at least one of SR, HARQ-ACK, and/or CSI.

Furthermore, UCI may be transmitted via a physical channel (e.g., PUCCH and/or PUSCH) or via MAC CE.

Here, according to the above-described Embodiment 1 and/or Embodiment 2, the setting values for one or more parameters among the plurality of parameters related to the UCI report in the configuration information may be changed without reconfiguring the configuration information. That is, for one UCI report configured by the configuration information, the setting values of some parameters for the UCI report may be changed without reconfiguring other UCI reports by higher layer signaling.

Here, according to Embodiment 1, although not illustrated in FIG. 18, the UE may receive information from the base station via lower layer signaling for changing a setting value for one or more parameters among the plurality of parameters related to the UCI report in the configuration information.

For example, the configuration information may include a plurality of candidate setting values or a range of setting values for the one or more parameters, and setting values for the one or more parameters may be indicated within the plurality of candidate setting values or the range of setting values via lower layer signaling (i.e., a report update).

Alternatively, the configuration information may not include setting values for the one or more parameters or may include a default value, and the setting values for the one or more parameters may be indicated by lower layer signaling.

In addition, the setting values for the one or more parameters may be applied from a point in time after a specific offset after the reception (or transmission by the base station) of the lower layer signaling for the setting values for the one or more parameters or the transmission (or reception by the base station) of the UE's response to the lower layer signaling.

Additionally, the setting values for the one or more parameters may be explicitly indicated by lower layer signaling for the setting values for the one or more parameters or may be indirectly indicated by indicating a specific identifier (ID) associated with the UCI report (e.g., a functionality ID or model ID associated with the UCI report).

In addition, although not shown in FIG. 18, prior to transmitting a UCI report, the UE may receive lower layer signaling from the base station that triggers the UCI report. In this case, lower layer signaling for setting values for the one or more parameters may trigger the UCI report, or lower layer signaling that triggers the UCI report may be transmitted separately.

Additionally, although not illustrated in FIG. 18, the UE may transmit a UE report to the base station regarding changes in the capabilities of the UE and/or artificial intelligence (AI)/machine learning (ML) functions and/or models related to the UCI report.

In this case, the setting values for one or more of the parameters may be changed based on the UE report.

For example, according to a combination of Embodiments 1 and 2, the UE transmits the UE report, and based on the UE report regarding a change in the AI/ML function and/or model related to the UE's capability and/or the UCI report (e.g., in conjunction with the UE report), the base station may transmit lower layer signaling to the UE to change setting values for one or more parameters related to the UCI report.

As another example, according to Embodiment 2, based on (e.g., in conjunction with) a UE report regarding a change in the UE's capabilities and/or AI/ML functions and/or models related to the UCI report, setting values for one or more of a plurality of parameters related to the UCI report (i.e., the operation of the UCI report and/or the content of the UCI report, etc.) may be changed.

Here, based on the UE report regarding the capability of the UE and/or the change of the AI/ML function and/or model related to the UCI report (e.g., in conjunction with), the setting values for the one or more parameters for the corresponding UCI report may be automatically applied. For example, according to Embodiment 2-1, the setting values for the one or more parameters may be changed from a specific point in time after the reporting time of the UE report. In other words, the setting values for the one or more parameters may be changed from a specific offset after the reporting time of the UE report or the reception of the base station's response to the UE report. Alternatively, according to Smbodiment 2-2, the UE report and the UCI report may be transmitted together.

In addition, UCI reporting is performed based on configuration information. Here, according to Embodiment 1, it can be performed based on the setting values of parameters configured by the configuration information and also based on the setting value of a parameter configured by lower layer signaling for the setting values of one or more parameters. In addition, according to Embodiment 2, UCI reporting can be performed based on the setting values of a parameter set by the configuration information and also based on the setting value of a parameter determined according to a change in UE capability/functionality/model according to the UE report by the UE.

Here, the payload size of the UCI report is configured to a maximum, and some bits or code points within the payload of the UCI report may not be used based on changes in the setting values for the one or more parameters.

In addition, based on changes in the setting values for the one or more parameters, the payload size of the UCI report exceeds the resources allocated for transmission of the UCI report, and some information within the UCI report may be omitted or specific predefined information may be included within the UCI report.

FIG. 19 is a diagram illustrating an operation of a base station for a method for transmitting and receiving uplink control information according to an embodiment of the present disclosure.

FIG. 19 illustrates an operation of a base station based on the previously proposed method. The example of FIG. 19 is provided for convenience of explanation and does not limit the scope of the present disclosure. Some step(s) illustrated in FIG. 19 may be omitted depending on circumstances and/or settings. In addition, the base station in FIG. 19 is only an example and may be implemented as a device illustrated in FIG. 20 below. For example, the processor (102/202) of FIG. 20 may control the transceiver (106/206) to transmit and receive channels/signals/data/information, etc., and may also control the processor (102/202) of Fig. 20 to store transmitted or received channels/signals/data/information, etc. in a memory (104/204).

Here, although not shown in FIG. 19, the base station may receive from the UE information about the UE's capabilities and/or information about the AI/ML model (related to UCI reporting) and/or related feature/functionality, and such information may be collectively referred to as UE information. For example, the UE may report, as UE information, the supported setting value(s), the range of the setting values, and/or the related ID(s) for a specific parameter for the feature. Such UE report may be reported periodically/aperiodic/semi-continuously, or may be reported event-based (i.e., whenever a change in information occurs).

Referring to FIG. 19, a base station transmits configuration information related to a UCI report to a UE (S1901).

Here, the configuration information may be transmitted via higher layer signaling (e.g., RRC signaling). For example, it may include CSI report configuration information.

In addition, according to Embodiment 1, the configuration information may include setting values for a plurality of parameters related to the UCI report (e.g., operation of UCI reporting and/or content within UCI reporting), a plurality of setting candidate values, a range of setting values, and/or a default/initial setting value, etc. In addition, based on the UE report reported in step S1701, configuration information for related AI/ML functionality and/or model may be included.

A base station receives a UCI report based on configuration information from a UE (S1902).

Here, UCI refers to control information transmitted by the UE to the base station. For example, it may include, but is not limited to, at least one of SR, HARQ-ACK, and/or CSI.

Furthermore, UCI may be transmitted via a physical channel (e.g., PUCCH and/or PUSCH) or via MAC CE.

Here, according to the above-described Embodiment 1 and/or Embodiment 2, the setting values for one or more parameters among the plurality of parameters related to the UCI report in the configuration information may be changed without reconfiguring the configuration information. That is, for one UCI report configured by the configuration information, the setting values of some parameters for the UCI report may be changed without reconfiguring other UCI reports by higher layer signaling.

Here, according to Embodiment 1, although not illustrated in FIG. 19, the base station may transmit information to the UE via lower layer signaling for changing a setting value for one or more parameters among the plurality of parameters related to the UCI report in the configuration information.

For example, the configuration information may include a plurality of candidate setting values or a range of setting values for the one or more parameters, and setting values for the one or more parameters may be indicated within the plurality of candidate setting values or the range of setting values via lower layer signaling (i.e., a report update).

Alternatively, the configuration information may not include setting values for the one or more parameters or may include a default value, and the setting values for the one or more parameters may be indicated by lower layer signaling.

In addition, the setting values for the one or more parameters may be applied from a point in time after a specific offset after the reception (or transmission by the base station) of the lower layer signaling for the setting values for the one or more parameters or the transmission (or reception by the base station) of the UE's response to the lower layer signaling.

Additionally, the setting values for the one or more parameters may be explicitly indicated by lower layer signaling for the setting values for the one or more parameters or may be indirectly indicated by indicating a specific identifier (ID) associated with the UCI report (e.g., a functionality ID or model ID associated with the UCI report).

In addition, although not shown in FIG. 19, prior to transmitting a UCI report, the base station may transmit lower layer signaling to the UE that triggers the UCI report. In this case, lower layer signaling for setting values for the one or more parameters may trigger the UCI report, or lower layer signaling that triggers the UCI report may be transmitted separately.

Additionally, although not illustrated in FIG. 19, the base station may receive a UE report from the UE regarding changes in the capabilities of the UE and/or artificial intelligence (AI)/machine learning (ML) functions and/or models related to the UCI report.

In this case, the setting values for one or more of the parameters may be changed based on the UE report.

For example, according to a combination of Embodiments 1 and 2, the base station receives the UE report from the UE, and based on the UE report regarding a change in the AI/ML function and/or model related to the UE's capability and/or the UCI report (e.g., in conjunction with the UE report), the base station may transmit lower layer signaling to the UE to change setting values for one or more parameters related to the UCI report.

As another example, according to Embodiment 2, based on (e.g., in conjunction with) a UE report regarding a change in the UE's capabilities and/or AI/ML functions and/or models related to the UCI report, setting values for one or more of a plurality of parameters related to the UCI report (i.e., the operation of the UCI report and/or the content of the UCI report, etc.) may be changed.

Here, based on the UE report regarding the capability of the UE and/or the change of the AI/ML function and/or model related to the UCI report (e.g., in conjunction with), the setting values for the one or more parameters for the corresponding UCI report may be automatically applied. For example, according to Embodiment 2-1, the setting values for the one or more parameters may be changed from a specific point in time after the reporting time of the UE report. In other words, the setting values for the one or more parameters may be changed from a specific offset after the reporting time of the UE report or the reception of the base station's response to the UE report. Alternatively, according to Smbodiment 2-2, the UE report and the UCI report may be transmitted together.

In addition, UCI reporting is performed based on configuration information. Here, according to Embodiment 1, it can be performed based on the setting values of parameters configured by the configuration information and also based on the setting value of a parameter configured by lower layer signaling for the setting values of one or more parameters. In addition, according to Embodiment 2, UCI reporting can be performed based on the setting values of a parameter set by the configuration information and also based on the setting value of a parameter determined according to a change in UE capability/functionality/model according to the UE report by the UE.

Here, the payload size of the UCI report is configured to a maximum, and some bits or code points within the payload of the UCI report may not be used based on changes in the setting values for the one or more parameters.

In addition, based on changes in the setting values for the one or more parameters, the payload size of the UCI report exceeds the resources allocated for transmission of the UCI report, and some information within the UCI report may be omitted or specific predefined information may be included within the UCI report.

General Device to which the Present Disclosure may be applied

FIG. 20 is a diagram which illustrates a block diagram of a wireless communication device according to an embodiment of the present disclosure.

In reference to FIG. 20, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Availability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1.  A method performed by a user equipment (UE) in a wireless communication system, the method comprising:

    receiving configuration information related to an uplink control information (UCI) report from a base station; and
    transmitting the UCI report to the base station based on the configuration information,
    wherein, among a plurality of parameters related to the UCI report in the configuration information, a setting value
    for at least one parameter is changeable without reconfiguring the configuration information.

2.  The method of claim 1, wherein the configuration information includes a plurality of candidate setting values or a range of setting values for the at least one parameter, and
    wherein the setting value for the at least one parameter is indicated within the plurality of candidate setting values or the range of setting values by lower layer signaling.

3.  The method of claim 1, wherein the configuration information does not include the setting value for at least one parameter or includes a default value, and
    wherein the setting value for at least one parameter is indicated by lower layer signaling.

4.  The method of claim 1, wherein the setting value for the at least one parameter is applied from a specific offset after reception of lower layer signaling for the setting value for the at least one parameter or transmission of a response from the UE to the lower layer signaling.

5.  The method of claim 1, wherein the setting value for the at least one parameter is explicitly indicated by lower layer signaling for the setting value for the at least one paramete or indirectly indicated by indicating a specific identifier (ID) related to the UCI report.

6.  The method of claim 1, wherein lower layer signaling for the setting value for the at least one parameter triggers the UCI report, or lower layer signaling that triggers the UCI report is transmitted separately.

7.  The method of claim 1, wherein a payload size of the UCI report is configured to a maximum, and some bits or code points in a payload of the UCI report are not used based on a change in the setting value for the at least one parameter.

8.  The method of claim 1, wherein based on a payload size of the UCI report exceeding a resource allocated for transmission of the UCI report due to a change in the setting value for the at least one parameter, some information in the UCI report is omitted, or specific predefined information is included in the UCI report.

9.  The method of claim 1, further comprising:
    transmitting, to the base station, a UE report related to a change in capability of the UE and/or artificial intelligence (AI)/machine learning (ML) functions and/or models related to the UCI report.

10. The method of claim 9, wherein the setting value for the at least one parameter is changed based on the UE report.

11. The method of claim 10, wherein the setting value for the at least one parameter is changed from a specific point in time after the UE report is reported.

12. The method of claim 10, wherein wherein the UE report and the UCI report are transmitted together.

13. A user equipment (UE) operating in a wireless communication system, the UE comprising:

    at least one transceiver for transmitting and receiving a wireless signal; and
    at least one processor for controlling the at least one transceiver,

wherein the at least one processor configured to:
receive configuration information related to an uplink control information (UCI) report from a base station; and
transmit the UCI report to the base station based on the configuration information,
wherein, among a plurality of parameters related to the UCI report in the configuration information, a setting value
for at least one parameter is changeable without reconfiguring the configuration information.

14. At least one non-transitory computer-readable medium storing at least one instruction, wherein the at least one instruction executable by at least one processor controls a user equipment (UE) to:

receive configuration information related to an uplink control information (UCI) report from a base station; and
transmit the UCI report to the base station based on the configuration information,
wherein, among a plurality of parameters related to the UCI report in the configuration information, a setting value
for at least one parameter is changeable without reconfiguring the configuration information.

15. A processing apparatus configured to control a user equipment (UE) in a wireless communication system, the processing apparatus comprising:

at least one processor; and
at least one computer memory operably connected to the at least one processor and storing instructions that,
based on being executed by the at least one processor, perform operations comprising:
receiving configuration information related to an uplink control information (UCI) report from a base station; and
transmitting the UCI report to the base station based on the configuration information,
wherein, among a plurality of parameters related to the UCI report in the configuration information, a setting value
for at
least one parameter is changeable without reconfiguring the configuration information.

16. A method performed by a base station in a wireless communication system, the method comprising:

transmitting configuration information related to an uplink control information (UCI) report to a user equipment
(UE); and
receiving the UCI report from the UE based on the configuration information,
wherein, among a plurality of parameters related to the UCI report in the configuration information, a setting value
for at least one parameter is changeable without reconfiguring the configuration information.

17. A base station operating in a wireless communication system, the base station comprising:

at least one transceiver for transmitting and receiving a wireless signal; and
at least one processor for controlling the at least one transceiver,
wherein the at least one processor configured to:
transmit configuration information related to an uplink control information (UCI) report to a user equipment (UE);
and
receive the UCI report from the UE based on the configuration information,
wherein, among a plurality of parameters related to the UCI report in the configuration information, a setting value
for at least one parameter is changeable without reconfiguring the configuration information.

EP 4 694 480 A1

FIG.1

AMF/UPF

AMF/UPF

NGC

NG-C/U

NG-C/U

NG-C/U

NG-C/U

Xn

gNB

gNB

Xn

Xn

gNB

NG-RAN

34

# FIG.2

Radio Frame 10ms

Fixed Size

Subframe 1ms

| 0 | 1 | 2 | 3 | 4 | 5 | 6 | 7 | 8 | 9 |

Subframe ={1,2,4} Slots

Slot

| 0 | 1 | 2 | 3 |

Slot={7,14} Symbols

Symbol

| 0 | 1 | 2 | 3 | 4 | 5 | 6 | 7 | 8 | 9 | 10 | 11 | 12 | 13 |

Size depends
on subcarrier
spacing

Mini-Slot
(URLLC)

Mini-Slot={2,4,7} Symbols

FIG.3

One Subframe

$14 \cdot 2^{\mu}$ OFDM Symbol

$k = N_{RB}^{\mu} N_{SC}^{RB} - 1$

Resource Block

Resource Element
- In a resource grid, $(k, \bar{l})$
- In a resource block, $(k, l)$

$N_{RB}^{\mu} N_{SC}^{RB} - 1$ Subcarrier

$N_{SC}^{RB}$ Subcarrier

$k = 0$

$l = 0$

$l = 14 \cdot 2^{\mu} - 1$

## FIG.4

## FIG.5

Resource grid

A carrier
(up to 3300 subcarriers,i,e.,275 RBs)

A BWP

1 RB=12 subcarrier

1 RE

1 subcarrier

1 Symbol

k=0

l=0  ·····

FIG.6

INITIAL CELL SEARCH | SYSTEM INFORMATION RECEPTION | RANDOM ACCESS PROCEDURE | GENERAL DL/UL Tx/Rx

PSS/SSS& [DLRS]& PBCH | PDCCH/ PDSCH (BCCH) | PRACH | PDCCH/ PDSCH | PUSCH | PDCCH/ PDSCH | PDCCH/ PDSCH | PUSCH/ PUCCH

S601   S602   S603   S604   S605   S606   S607   S608

· DL/UL ACK/NACK
· UE CQI/PMI RI REPORT
  USING PUSCH AND PUCCH

FIG.7

FIG.8

Input layer  Hidden layer  Output layer

FIG.9

FIG.10

Input image
36 × 36

4 feature maps

28 × 28

14 × 14

Convolution
(kernel:9×9×1)

Max pooling

FIG.11

W          V

$x_1$

h1

$x'_1$

$x_2$

h2

$x'_2$

$x_3$

$x'_3$

Encoder          Decoder

Loss function: $\underset{W,V}{\operatorname{argmin}} \|x - g(f(x))\|^2$ ,
where h = f(x) = Wx, x' = g(h) = Vh

## FIG.12

## FIG.13

End device partition
(partial AI operation/model)

Network partition
(partial AI operation/model)

Actor

Intermediate
data

Inference
outputs

End device

Network AI end device

FIG.14

UE RAN node 1 RAN node 2 Network node

1. Training data

1. Training data

2. Model training

3. Model deployment/update

4. Inference data

4. Inference data

5. Model inference

6. Model performance feedback

7. Action

8. Feedback

8. Feedback

FIG.15

UE RAN node 1 RAN node 2

1. Training data

1. Training data

2. Model training

3. Inference data

3. Inference data

4. Model inference

5. Action

6. Feedback

# FIG.16

UE        RAN node

1. Training data →

2. Model training

← 3. Model deployment/update

← 4. Inference data

5. Model inference

6. Model performance feedback →

7. Action

8. Feedback →

# FIG.17

Network        UE

UE report    S1701

Configuration information    S1702

UCI report    S1703

Update report    S1704

UCI report    S1705

FIG.18

Receive configuration information related to UCI report — S1801

Transmit UCI report based on configuration — S1802

FIG.19

Transmit configuration information related to UCI report — S1901

Receive UCI report based on configuration — S1902

FIG.20

EP 4 694 480 A1

## INTERNATIONAL SEARCH REPORT

| International application No. |
|---|
| **PCT/KR2024/004092** |

| A. | CLASSIFICATION OF SUBJECT MATTER |
|---|---|
| | **H04W 72/21**(2023.01)i; **H04W 72/231**(2023.01)i; **H04W 72/232**(2023.01)i; **H04W 72/04**(2009.01)i; **G06N 20/00**(2019.01)i |

According to International Patent Classification (IPC) or to both national classification and IPC

| B. | FIELDS SEARCHED |
|---|---|

Minimum documentation searched (classification system followed by classification symbols)

H04W 72/21(2023.01); H04L 1/16(2006.01); H04L 1/18(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: UCI reporting configuration, UCI, multiple parameter, change, reset, AI/ML, trigger

| C. | DOCUMENTS CONSIDERED TO BE RELEVANT | |
|---|---|---|

| Category* | Citation of document, with indication, where appropriate, of the relevant passages | Relevant to claim No. |
|---|---|---|
| A | ETRI. Discussion on other aspects on AI/ML for CSI feedback enhancement. R1-2301042, 3GPP TSG RAN WG1 #112. Athens, Greece. 17 February 2023. <br> See section 2.1.3. | 1-17 |
| A | APPLE INC. Discussion on other aspects of AI/ML for CSI enhancement. R1-2301338, 3GPP TSG- RAN WG1 Meeting #112. Athens, Greece. 17 February 2023. <br> See sections 2-3. | 1-17 |
| A | ERICSSON. Discussions on AI-CSI. R1-2300153, 3GPP TSG-RAN WG1 Meeting #112. Athens, Greece. 17 February 2023. <br> See sections 4-9. | 1-17 |
| A | HUAWEI et al. Discussion on AI/ML for CSI feedback enhancement. R1-2300109, 3GPP TSG-RAN WG1 Meeting #112. Athens, Greece. 17 February 2023. <br> See sections 2-3. | 1-17 |
| A | US 2019-0363842 A1 (SAMSUNG ELECTRONICS CO., LTD.) 28 November 2019 (2019-11-28) <br> See paragraphs [0106]-[0110]; and claim 16. | 1-17 |

| ☐ Further documents are listed in the continuation of Box C. | ☑ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **23 July 2024** | **24 July 2024** |

| Name and mailing address of the ISA/KR | Authorized officer |
|---|---|
| **Korean Intellectual Property Office** <br> **Government Complex-Daejeon Building 4, 189 Cheongsa-** <br> **ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/004092**

| Patent document cited in search report | | | Publication date (day/month/year) | Patent family member(s) | | | Publication date (day/month/year) |
|---|---|---|---|---|---|---|---|
| US | 2019-0363842 | A1 | 28 November 2019 | CN | 108306720 | A | 20 July 2018 |
| | | | | CN | 108306720 | B | 21 June 2022 |
| | | | | EP | 3568938 | A1 | 20 November 2019 |
| | | | | EP | 3568938 | B1 | 31 March 2021 |
| | | | | KR | 10-2019-0098753 | A | 22 August 2019 |
| | | | | KR | 10-2607557 | B1 | 30 November 2023 |
| | | | | US | 11101943 | B2 | 24 August 2021 |

Form PCT/ISA/210 (patent family annex) (July 2022)